(19) Europäisches Patentamt
European Patent Office
Office européen des brevets

(11) EP 4 601 366 A1

(12) **EUROPEAN PATENT APPLICATION**
published in accordance with Art. 153(4) EPC

(43) Date of publication:
**13.08.2025 Bulletin 2025/33**

(21) Application number: **23898009.8**

(22) Date of filing: **05.09.2023**

(51) International Patent Classification (IPC):
***H04W 56/00*** *(2009.01)* ***H04B 7/185*** *(2006.01)*
***H04W 84/06*** *(2009.01)*

(52) Cooperative Patent Classification (CPC):
**H04B 7/185; H04W 56/00; H04W 84/06**

(86) International application number:
**PCT/KR2023/013245**

(87) International publication number:
**WO 2024/117475 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2022 KR 20220165386**

(71) Applicant: **Samsung Electronics Co., Ltd.**
**Suwon-si, Gyeonggi-do 16677 (KR)**

(72) Inventors:
- **KIM, Sunhyun**
**Suwon-si, Gyeonggi-do 16677 (KR)**
- **KIM, Dongmyung**
**Suwon-si, Gyeonggi-do 16677 (KR)**

(74) Representative: **Nederlandsch Octrooibureau**
**P.O. Box 29720**
**2502 LS The Hague (NL)**

(54) **METHOD FOR CORRECTING DOPPLER SHIFT INFORMATION AND TIMING ADVANCE INFORMATION IN COMMUNICATION SYSTEM IN NON-TERRESTRIAL NETWORK**

(57) A method performed by a terminal in a wireless communication system supporting an NTN, according to the present disclosure, may comprise the steps of: receiving a signal including first satellite information and at least one piece of second satellite information from a first satellite providing a cell in which the terminal is located; on the basis of the first satellite information and the at least one piece of second satellite information, determining at least one of timing advance (TA) information and Doppler shift information for each transmission time duration; and transmitting and receiving a signal on the basis of the determined at least one of the timing advance information and the Doppler shift information for each transmission time duration.

FIG. 3B

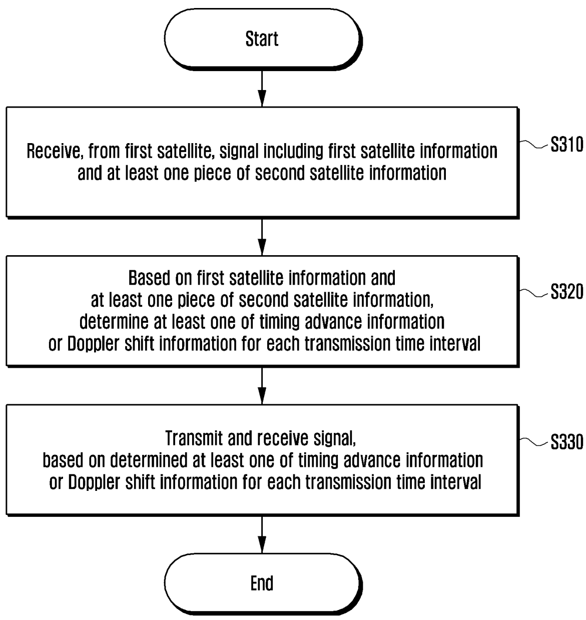


EP 4 601 366 A1

## Description

### [Technical Field]

The disclosure relates to a method and an apparatus for transmitting and receiving a signal by a terminal in a non-terrestrial network (NTN). More specifically, the disclosure relates to a method and an apparatus for transmitting and receiving a signal by a terminal by acquiring time and frequency synchronization by performing a correction of timing advance (TA) information and Doppler shift (DS) information in a non-terrestrial network (NTN).

### (Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobile devices are expected to evolve in various form factors, such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 $\mu$ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

Meanwhile, as communication systems develop, non-terrestrial network (NTN) technology is being developed to combine mobile communications with satellite communications to extend communication coverage to the entire globe. NTN aims to provide broad service coverage by establishing communicable areas in areas in which it is physically or economically infeasible to install base stations for mobile communications.

The satellites that can be used by the NTN include a geostationary orbit (GEO) satellite, a low Earth orbit (LEO) satellite, a medium Earth orbit (MEO) satellite, and a high Earth orbit (HEO) satellite, depending on the altitude of a satellite. The LEO satellite is located at a lower altitude than other types of satellites, and thus the round-trip time of the radio wave is short and the speed (about 7.56 km/s) is very high. Therefore, there is an advantage in ensuring a relatively low latency when using a LEO satellite, but there are technical difficulties in obtaining time and frequency synchronization because the distance between the satellite and the terminal (or satellite antenna) is constantly changing.

In 3GPP NTN, the satellites broadcast satellite-related information (e.g., satellite position, satellite speed, satellite type, etc.) at regular intervals for time and frequency synchronization. The shorter the broadcast cycle, the smaller the time and frequency synchronization error and the higher the power consumption load. The longer the broadcast cycle, the lower the power consumption load and the more the time and frequency synchronization error.

Accordingly, a method and an apparatus for obtaining time and frequency synchronization with low computational overhead regardless of the broadcast cycle are required.

## [Disclosure of Invention]

### [Technical Problem]

An aspect of the disclosure is to propose a method of performing a correction of Doppler shift information and timing advance information on a transmission time interval basis by using information about the current satellite and information about a future satellite, and obtaining time and frequency synchronization on a transmission time interval basis.

Another aspect of the disclosure is to propose a method of increasing the period during which satellite communication is possible by performing a correction of Doppler shift information and timing advance information by using satellite information, despite an intermittent failure in receiving satellite information.

The technical subjects pursued in embodiments of the disclosure may not be limited to the above-mentioned technical subjects, and other technical subjects which are not mentioned herein may be clearly understood from the following description by those skilled in the art to which the disclosure pertains.

### [Solution to Problem]

According to an embodiment of the disclosure for achieving the above aspect, proposed is a method by a terminal in a wireless communication system supporting a non-terrestrial network (NTN), the method including receiving a signal including first satellite information and at least one piece of second satellite information from a first satellite providing a cell in which the terminal is located, determining at least one of timing advance (TA) information or Doppler shift information for each transmission time interval, based on the first satellite information and the at least one piece of second satellite information, and transmitting and receiving a signal, based on the determined at least one of the timing advance information or the Doppler shift information for each transmission time interval.

According to an embodiment of the disclosure for achieving the above aspect, proposed is a method by a first satellite in a wireless communication system supporting a non-terrestrial network (NTN), the method including generating a signal to be transmitted to a terminal located in a cell provided by the first satellite, the signal including first satellite information and at least one piece of second satellite information, transmitting the signal including the first satellite information and the at least one piece of second satellite information, and transmitting and receiving data for each transmission time interval, based on the first satellite information and the at least one piece of second satellite information.

According to an embodiment of the disclosure for achieving the above aspect, proposed is a terminal in a wireless communication system supporting a non-terrestrial network (NTN), the terminal including a transceiver configured to transmit and receive a signal, and a controller connected to the transceiver, wherein the controller is configured to perform control to receive a signal including first satellite information and at least one piece of second satellite information from a first satellite providing a cell in which the terminal is located, determine one of timing advance (TA) information or Doppler shift information for each transmission time interval, based on the first satellite information and the at least one piece of second satellite information, and transmit and receive a signal, based on the determined at least one of the timing advance information or the Doppler shift information for each transmission time interval.

According to an embodiment of the disclosure for achieving the above aspect, proposed is a first satellite in a wireless communication system supporting a non-terrestrial network (NTN), the first satellite including a transceiver configured to transmit and receive a signal, and a controller, wherein the controller is configured to perform control to generate a signal to be transmitted to a terminal located in a cell provided by the first satellite, the signal including first satellite information and at least one piece of second satellite information, transmit the signal including the first satellite information and the at least one piece of second satellite information, and transmit and receive data for each transmission time interval, based on the first satellite information and the at least one piece of second satellite information.

## [Advantageous Effects of Invention]

According to various embodiments proposed in the disclosure, it is possible to reduce communication errors that occur when a terminal is unable to accurately measure Doppler shift information and timing advance information due to the difference between the actual satellite information and the satellite information stored by the terminal.

Specifically, by applying corrected information for each transmission time interval, it is possible to reduce the frequency synchronization error and the timing advance error caused by the Doppler shift, and thus achieve accurate synchronization in time. Accordingly, it is possible to reduce the CP mismatching of the OFDM.

Advantageous effects obtainable from the disclosure may not be limited to the above-mentioned effects, and other effects which are not mentioned herein may be clearly understood from the following description by those skilled in the art to which the disclosure pertains.

## [Brief Description of Drawings]

FIG. 1 illustrates the structure of a non-terrestrial network (NTN) to which the disclosure is applicable.

FIG. 2 illustrates an example of the process of establishing synchronization and transmitting and receiving data in an NTN.

FIG. 3A illustrates a method of transmitting and receiving a signal in an NTN to which the disclosure is applicable.

FIG. 3B illustrates a method of transmitting and receiving a signal in an NTN to which the disclosure is applicable.

FIG. 4A is a flowchart illustrating a sequence in which a timing advance correction is performed for each transmission time interval in an NTN to which the disclosure is applicable.

FIG. 4B is a flowchart illustrating a sequence in which a timing advance correction is performed for each transmission time interval in an NTN to which the disclosure is applicable.

FIG. 5A illustrates a specific embodiment in which a timing advance correction is performed for each transmission time interval in an NTN to which the disclosure is applicable.

FIG. 5B illustrates a specific embodiment in which a timing advance correction is performed for each transmission time interval in an NTN to which the disclosure is applicable.

FIG. 5C illustrates a specific embodiment in which a timing advance correction is performed for each transmission time interval in an NTN to which the disclosure is applicable.

FIG. 6 is a flowchart illustrating a sequence in which Doppler shift correction is performed for each transmission time interval in an NTN to which the disclosure is applicable.

FIG. 7 illustrates a specific embodiment in which Doppler shift correction is performed for each transmission time interval in an NTN to which the disclosure is applicable.

FIG. 8 illustrates an embodiment in which a signal is transmitted and received based on system information in an NTN to which the disclosure is applicable.

FIG. 9 illustrates an embodiment in which a signal is transmitted and received based on a reference signal in an NTN to which the disclosure is applicable.

FIG. 10 illustrates another embodiment in which a signal is transmitted and received based on a reference signal in an NTN to which the disclosure is applicable.

FIG. 11 illustrates an embodiment in which a signal is transmitted and received based on a radio resource control (RRC) message in an NTN to which the disclosure is applicable.

FIG. 12 illustrates another embodiment in which a signal is transmitted and received based on an RRC message in an NTN to which the disclosure is applicable.

FIG. 13 illustrates another embodiment in which a signal is transmitted and received based on an RRC message in an NTN to which the disclosure is applicable.

FIG. 14 illustrates another embodiment in which a signal is transmitted and received based on an RRC message in an NTN to which the disclosure is applicable.

FIG. 15 illustrates a method of driving a timer in an NTN to which the disclosure is applicable.

FIG. 16 illustrates a structure of a UE according to an embodiment of the disclosure.

## [Mode for the Invention]

Hereinafter, embodiments of the disclosure will be described with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea. For the same reason, in the accompanying drawings, some elements may be exaggerated, omitted, or schematically illustrated. Also, the size of each element does not completely reflect the actual size. In the respective drawings, the same or corresponding elements are provided with the same or like reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The present embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, some of terms and names defined in the 3rd generation partnership project (3GPP) standards (standards for 5G, NR, LTE, or similar systems) may be used for the convenience of description. In addition, terms and names used in existing communication systems or newly defined in next-generation communication systems (e.g., 6G and beyond-5G systems) to which the disclosure is applicable may also be used. Use of these terms is not intended to limit the disclosure by the terms and names, and the disclosure may be applied in the same way to systems that conform other standards, and may be changed into other forms without departing from the technical idea of the disclosure.

As used here in, it will be understood that the singular expressions "a", "an", and "the" include plural expressions unless the context clearly indicates otherwise. In an embodiment of the disclosure, the terms including an ordinal number, such as expressions "a first" and "a second" may be used to described various elements, but the corresponding elements should not be limited by such terms. The above terms are used merely for the purpose of distinguishing one element from other elements. For example, a first element may be termed a second element, and similarly, a second element may be termed a first element without departing from the scope of protection of the disclosure. In an embodiment of the disclosure, the term "and/or" includes any one of any combination of multiple relevant items enumerated.

The terms as used in an embodiment of the disclosure are merely used to describe specific embodiments, and are not intended to limit the disclosure. A singular expression may include a plural expression unless they are definitely different in a context. As used herein, the expression "include" or "have" are intended to specify the existence of mentioned features, numbers, steps, operations, elements, components, or combinations thereof, and should be construed as not precluding the possible existence or addition of one or more other features, numbers, steps, operations, elements, components, or combinations thereof. Also, as used in an embodiment of the disclosure, the phrase "associated with" and "associated therewith", as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Furthermore, as used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than". Before the detailed description of the disclosure, examples of construable meanings of some terms used herein are given below. However, it should be noted that the terms are not limited to the examples of the construable meanings as given below.

In the disclosure, a terminal (or communication terminal) is an entity that communicates with a base station or any other terminal, and may be referred to as a node, a user equipment (UE), a next generation UE (NG UE), a mobile station (MS), a device, a terminal, or the like. The terminal may include at least one of a smartphone, a tablet personal computer (PC), a mobile phone, a video phone, an electronic book reader, a desktop PC, a laptop PC, a netbook computer, a personal digital assistant (PDA), a portable multimedia player (PMP), an MP3 player, a medical device, a camera, and a wearable device. Also, the terminal may include at least one of a television, a digital video disk (DVD) player, an audio, a refrigerator, an air conditioner, a vacuum cleaner, an oven, a microwave oven, a washing machine, an air purifier, a set-top box, a home automation control panel, a security control panel, a media box, a game console, an electronic dictionary, an electronic key, a camcorder, and an electronic photo frame. In addition, the terminal may include at least one of various medical devices (e.g., various portable medical measuring devices (blood glucose monitoring device, heart rate monitoring device, blood pressure measuring device, body temperature measuring device, etc.), magnetic resonance angiography (MRA), magnetic resonance imaging (MRI), computed tomography (CT) machine, ultrasonic machine, etc.), a navigation device, a global positioning system (GPS) receiver, an event data recorder (EDR), a flight data recorder (FDR), a vehicle infotainment device, electronic equipment for a ship (e.g., ship navigation device, gyro-compass, etc.), avionics, a security device, an automobile head unit, a home or industrial robot, a drone, an automatic teller's machine (ATM) in banks, point of sales (POS) in a shop, or Internet of things devices (e.g., light bulb, various sensors, electric or gas meter, sprinkler device, fire alarm, thermostat, streetlamp, toaster, sporting goods, hot water tank, heater, boiler, etc.). Furthermore, the terminal may include various types of multimedia systems capable of communication functions. The disclosure is not limited by the above examples, and the terminal may also be referred to by terms having the same or similar meanings.

In the disclosure, a base station is an entity that communicates with terminals and allocates resources to the terminals, and may have various forms and be referred to as a base station (BS), a Node B (NB), a next generation radio access network (NG RAN), an access point (AP), a transmission reception point (TRP), a wireless access unit, a base station controller, a node on a network, or the like. Alternatively, according to function split, the base station may be referred to as a central unit (CU) or a distributed unit (DU). The disclosure is not limited by the above examples, and the base station may also be referred to by terms having the same or similar meanings.

In the disclosure, the term "high level information" may be referred to as "high level message", "high level signal", "high level signaling", "high layer signaling", or "high layer signaling", or "radio resource control (RRC) message", and the disclosure is not limited thereto and the term may also be referred to as any other term having the same or like meaning. Also, in the disclosure, the term "control information" may be referred to as "control signaling", "medium access control (MAC)-control element (CE)", or "downlink control information (DCI)", and the disclosure is not limited thereto and the term may also be referred to as any other terms having the same or like meaning.

FIG. 1 illustrates the structure of a non-terrestrial network (NTN) to which the disclosure is applicable.

Referring to FIG. 1, a non-terrestrial network (NTN) to which the disclosure is applicable may include a satellite 101, a user equipment (UE) 102, a gateway 103, or a data network 104.

The NTN considered in the disclosure is not limited to the configuration shown in FIG. 1, and may further include a network entity or a network node.

The satellite 101 usable by the NTN may include a geostationary satellite (GEO) and a mobile satellite. The mobile satellite may include medium Earth orbit (MEO), high Earth orbit (HEO), and low Earth orbit (LEO) satellites, depending on the elevation of a satellite.

The geostationary satellite is a satellite that files in a geostationary orbit at an altitude of about 36,000 kilometers above the Earth, and has the same rotation period as the Earth, and thus when viewed from the surface of the Earth, the satellite appears to be stationary at a point in the sky. When communicating with a geostationary satellite due to the high altitude of the satellite, radio wave arrival signals suffer from path loss, resulting in relatively weak radio signals compared to terrestrial networks and lower communication performance through radio signals. In addition, the round-trip time for radio waves to travel between the satellite and devices and terminals on the surface of the Earth is relatively long (about 500ms).

Since LEO satellites are at a lower altitude than geostationary satellites, there is less path loss and the radio signal is relatively strong. On the other hand, compared to terrestrial networks, they still have greater path loss and weaker radio signals. In addition, unlike geostationary satellites, LEO satellites travel at very high speeds relative to the Earth's surface (about 7.56 km relative to low Earth orbit).

A service link 105 may include a connection between the UE 102 and the satellite 101.

A feeder link 106 may include a connection between the satellite 101 and the gateway 103.

FIG. 2 illustrates an example of the process of establishing synchronization and transmitting and receiving data in an NTN.

In the NTN, synchronization is established between a service link 105 and a feeder link 106 in the same manner as in the terrestrial network, and data transmission and reception may be performed accordingly. Therefore, the precise matching of the uplink and downlink synchronization between the UE 102 and the satellite 101 may have a significant impact on the communication performance.

For frequency and time synchronization in the NTN, a satellite may broadcast satellite-related information (e.g., satellite position, satellite speed, satellite type, etc.) at regular intervals. At this time, the satellite may broadcast the satellite-related information through the System Information Block.

In the case of the feeder link 106, synchronization of frequency and time may be achieved through open-loop TA correction through CommonTA, CommonTADrift, and CommonTADriftVariation included in the system information broadcast by the satellite 101.

In the case of the service link 105, the UE 102 may determine and correct timing advance information and Doppler shift information, based on satellite-related information 211 broadcast by the satellite 101 and UE-related information measured using the GPS of the UE 102. Thereafter, frequency and time synchronization may be performed based on the corrected timing advance information and Doppler shift information. The satellite 101 may also adjust the broadcasting period to reduce the power consumption of the UE 102 and to perform accurate correction of the timing advance information and the Doppler shift information.

The satellite-related information 211 may include information regarding the position and speed of the satellite 101 that is currently communicating with the UE 102. The UE 102 may perform a timing advance and Doppler shift correction by obtaining the position and speed information of the current satellite included in the satellite-related information 211. In this case, the overhead may be reduced because the timing advance and Doppler shift correction is performed based on the current satellite-related information, but the accuracy of the correction may also be reduced. In FIG. 2, only the case where the satellite-related information 211 includes information on the position and speed of the satellite currently communicating with the UE is illustrated, but the embodiment of the disclosure is not limited thereto.

Alternatively, the satellite-related information 211 may include time-specific information related to the satellite 101. The UE 102 may calculate the time-specific satellite information included in the satellite-related information 211 to perform a timing advance and Doppler shift correction, based on accurate time-specific position and speed of the satellite. In this case, the accuracy of the correction may be increased by obtaining accurate time-specific satellite-related information, but the overhead may also be increased.

The UE 102 may access the satellite network by performing the timing advance and Doppler shift correction, based on the received satellite-related information 211 and UE-related information (e.g., UE position, UE speed, etc.), and may perform communication by constantly matching the frequency and time synchronization after accessing the satellite network.

FIG. 3A illustrates a method of transmitting and receiving a signal in an NTN to which the disclosure is applicable, and FIG. 3B illustrates a method of transmitting and receiving a signal in an NTN to which the disclosure is applicable.

More specifically, FIG. 3A illustrates a concept for transmitting and receiving a signal for each transmission time interval in an NTN to which the disclosure is applicable.

Referring to FIG. 3A, signal transmission and reception are performed by applying the corrected timing advance (TA) information or Doppler shift information for each transmission time interval (TTI) in the non-terrestrial network (NTN) to which the disclosure is applicable.

First, the transmission time interval (TTI) may include a unit in which scheduling is performed, i.e., a unit in which transmission of control information and data transmission based on the control information are performed. Alternatively, the TTI may denote a predetermined time length. The TTI may include a subframe of a 4G communication system and a slot of a 5G communication system, but is not necessarily limited to the terms listed above. In this specification, the transmission time intervals are described in terms of frames and subframes to help the understanding of the disclosure, but the embodiments of the disclosure are not intended to be limiting and other modified examples are possible.

The current transmission time interval (T0) may denote a timepoint at which the frame number = n and the subframe number = m. Future specific transmission time interval (T1) may denote a timepoint at which the subframe number is larger by "i" than that of T0. Another future specific transmission time interval T2 may denote a timepoint at which the subframe number is larger by "i" than that of T1. In other words, i may denote an interval between the current transmission time interval (T0) and the future specific transmission time interval (T1), or an interval between the future specific transmission time interval (T1) and the other future specific transmission time interval T2. T (Frame number = k,

Subframe number = I) may denote a predetermined transmission time interval to which the transmission time interval-specific timing advance information and Doppler shift information may be applied in the disclosure.

The satellite information (satelliteInformation) described throughout the specification may include at least one of first satellite information 301 or second satellite information 302 and 303 below.

A first satellite 301 may include a satellite that is currently in communication with a UE 300 (hereinafter, referred to as the term "current satellite" and they may be used interchangeably). For example, the first satellite may include the satellite 101 that is currently communicating with the UE 102 in FIG. 1. In FIG. 3, when the current transmission time interval is referred to as T0, the first satellite may include a satellite 301 that is currently communicating with the UE 300 at the current transmission time interval (T0).

The first satellite information 311 may include information about the current satellite, and the information about the current satellite may include at least one of the position information or speed information of the first satellite 301 that is currently communicating with the UE.

The second satellites 302 and 303 may include satellites (which may be used interchangeably with the term "future satellites") that are expected to transmit and receive signals to and from the UE 300 at specific future transmission intervals T1 and T2. For example, the (2-1)th satellite 302 may denote a satellite that is expected to communicate with the UE 300 at a future transmission time interval (T1). The (2-2)th satellite 303 may include a satellite that is expected to communicate with the UE 300 at another future specific transmission time interval T2. The second satellites 302 and 303 may be the same type of satellite as the first satellite 301 or may be a different type of satellite. Although only future transmission time intervals T1 and T2 are shown in FIG. 3A, embodiments of the disclosure are not limited to these, and additional embodiments may exist.

The second satellite information 312 and 313 may include information about a future satellite, and the information about the future satellite may include at least one of position information, speed information, acceleration information, or direction information of the second satellite 302 and 303 that are expected to communicate with the UE at the future specific transmission time intervals T1 and T2.

FIG. 3B is a flowchart illustrating a sequence of transmitting and receiving a signal for each transmission time interval in an NTN to which the disclosure is applicable.

In operation S310, the UE 300 may receive, from the first satellite 301, a signal including the first satellite information 311 and at least one piece of the second satellite information 312 and 313. The signal may include a system information block (SIB), a reference signal (RS), or an RRC message. The system information signal may include SIB 19, wherein the SIB 19 may include current information of the satellite currently broadcasting the SIB 19 (e.g., satellite type, satellite position, satellite speed, etc.). The system information may also include a signal capable of transmitting various pieces of satellite information. However, the specific examples of signal described above are merely provided to help the understanding of the disclosure, and the disclosure is not limited to these. Methods of transmitting and receiving a signal by using the system information signal, reference signal, or RRC message are described in detail in FIGS. 8 to 14.

In operation S320, the UE 300 may determine at least one of timing advance information or Doppler shift information for each transmission time interval, based on the first satellite information 311 and at least one piece of the second satellite information 312 and 313. A method of determining the timing advance information will be described in more detail with reference to FIGS. 4 to 5. The method of determining the Doppler shift information is described in detail in FIGS. 6 and 7.

In operation S330, based on the determined timing advance information or Doppler shift information for each transmission time interval, the UE 300 may transmit and receive the signal by applying at least one of the determined timing advance information or Doppler shift information for each transmission time interval.

Performing the timing advance correction for each transmission time interval may imply applying the determined timing advance correction information for each transmission time interval. Transmitting and receiving a signal by applying the determined timing advance information at a predetermined transmission time interval may imply transmitting and receiving the signal earlier or later by a time corresponding to the determined timing advance information at a predetermined reference timepoint.

Performing Doppler shift correction for each transmission time interval may imply applying the determined Doppler shift information for each transmission time interval. Transmitting and receiving a signal by applying the determined Doppler shift information at a predetermined transmission time interval may imply transmitting and receiving the signal at a frequency greater than or less than a frequency corresponding to the determined Doppler shift information at a predetermined reference timepoint.

The timing advance information may include a timing advance value. Here, for the sake of understanding the disclosure, an example will be given in which the timing advance value for a current satellite and the timing advance value for a future satellite are calculated. Specifically, the method will be explained by calculating the timing advance value to be applied for each transmission time interval by applying an interpolation between the timing advance value for the current satellite and the timing advance value for the future satellite, and then applying the calculated timing advance value to transmit and receive signals. However, this is only an example to help understand the disclosure, and the disclosure is not limited thereto.

FIGS. 4A is a flowchart illustrating a sequence in which a timing advance correction is performed for each transmission time interval in an NTN to which the disclosure is applicable, and FIGS. 4B is a flowchart illustrating a sequence in which a timing advance correction is performed for each transmission time interval in an NTN to which the disclosure is applicable.

According to the disclosure, a timing advance correction may be performed for each transmission time interval by using the first satellite information 311 and the second satellite information 312 and 313 (of a specific transmission time interval in the future) after at least one predetermined broadcast interval. Performing the timing advance correction for each transmission time interval may imply applying the determined timing information for each transmission time interval.

An interpolation applied between the above timing advance values may be different depending on the given conditions.

First, in case that a signal including satellite information includes one piece of the second satellite information 312 or 313, a timing advance value for each transmission time interval may be calculated by applying linear interpolation between the timing advance value for the current satellite and the timing advance value for the future satellite, and the calculated timing advance value may be applied for each transmission time interval.

Second, in case that a message including satellite information includes two or more pieces of future satellite-related information 312 and 313, the interpolation may be applied differently based on the orbits of the satellites. When one of the two endpoints of the expected trajectory of the satellite based on the future satellite-related information 312 and 313 has the highest elevation angle, linear interpolation may be applied. In contrast, when the midpoint, rather than the two endpoints, of the expected satellite trajectory has the highest elevation angle based on the future satellite-related information 312 and 313, quadratic interpolation may be applied. In addition, the timing advance value for each transmission time interval may be calculated using the corresponding interpolation, and the calculated timing advance value may be applied to the corresponding transmission time interval to transmit and receive a signal. The specific procedure is as follows.

In operation S401, the UE 300 may, upon receiving a signal including satellite information, determine whether the satellite information included in the received signal includes only the first satellite information 311, or includes at least one piece of the second satellite information 312 or 313 in addition to the first satellite information 311. The first satellite information 311 may include information about a current satellite, and the information about the current satellite may include at least one of position information or speed information of the current satellite 301 that is currently communicating with the UE. The second satellite information 312 and 313 may include information about future satellites, and the information about future satellites may include at least one of position information, speed information, acceleration information, and direction information of future satellites 302 and 303 that are expected to communicate with the UE at a specific transmission time interval.

In operation S402, when the signal includes only the first satellite information 311, the correction of the Doppler shift and timing advance may be performed in the same manner as before, by using only the GNSS information of the UE and information about the current satellite information included in the first satellite information 311.

In operation S403, when the received signal includes the first satellite information 311 and at least one piece of second satellite information 312 and 313 together, different operations may be performed depending on the number of the at least one piece of second satellite information 312 and 313.

In operation S404, when the received signal includes only one piece of the second satellite information 312 or 313, a timing advance value ($TA_{sat_0}$) of the current satellite 301 and a timing advance value ($TA_{sat_1}$) of the future satellite 302 or 303 at a specific transmission time interval may be calculated using the GNSS information of the UE, the position information of the current satellite included in the first satellite information 311, and the position information of the future satellite included in the second satellite information 312 or 313.

Thereafter, in operation S405, linear interpolation may be applied to the two timing advance values $TA_{sat_0}$ and $TA_{sat_1}$. A signal (or data) may be transmitted or received by calculating a timing advance value for each transmission time interval and applying the calculated timing advance value for each transmission time interval.

In operation S406, when the received signal includes more than two pieces of second satellite information 312 and 313, an elevation angle for each satellite may be calculated by using the GNSS information of the UE, the position information of the current satellite 301 included in the first satellite information 311, and the position information of the future satellites 302 and 303 included in the second satellite information 312 and 313.

In operation S407, it may be determined whether the elevation angle of the current satellite 301 included in the first satellite information 311 or the elevation angle of the satellite at the farthest future transmission time interval T2 among the one or more second satellites 302 and 303 is the largest elevation angle.

In operation S408, when the satellite having the highest elevation angle among the calculated elevation angles does not correspond to the current satellite 301 or the satellite 303 at the farthest future transmission time interval, a timing advance value ($TA_{sat_0}$) of the current satellite may be calculated based on the GNSS information of the UE and the first satellite information 311, and a timing advance value ($TA_{sat_1}$, $TA_{sat_1}$ $TA_{sat_2}$) of the satellite at a specific future transmission time interval (T1, T2) may be calculated based on the GNSS information of the UE and the respective pieces of the second satellite information 312 and 313.

Thereafter, in operation S409, quadratic interpolation is used for each timing advance value ($TA_{sat_0}$, $TA_{sat_1}$, $TA_{sat_2}$) to calculate the timing advance for each transmission time interval and the calculated timing advance value may be applied for each transmission time interval.

In operation S410, when the satellite having the highest elevation angle among the calculated elevation angles corresponds to the current satellite or the satellite at the farthest future transmission time interval, the timing advance value ($TA_{sat_0}$) of the current satellite may be calculated based on the GNSS information of the UE and the first satellite information 311. The timing advance value ($TA_{sat_1}$) of the satellite at a specific future transmission time interval may be calculated based on the GNSS information of the UE and the second satellite information 312.

Thereafter, in operation S411, the timing advance for each transmission time interval may be calculated using linear interpolation on each timing advance value ($TA_{sat_0}$, $TA_{sat_1}$), and the calculated timing advance value may be applied for each transmission time interval.

FIG. 5A illustrates a specific embodiment in which a timing advance correction is performed for each transmission time interval in an NTN to which the disclosure is applicable, FIG. 5B illustrates a specific embodiment in which a timing advance correction is performed for each transmission time interval in an NTN to which the disclosure is applicable, and FIG. 5C illustrates a specific embodiment in which a timing advance correction is performed for each transmission time interval in an NTN to which the disclosure is applicable.

More specifically, FIG. 5A illustrates a method of calculating a timing advance value by using linear interpolation when the signal received by the UE includes first satellite information and one piece of second satellite information.

The current transmission time interval (T0) may imply a timepoint at which frame number = n and subframe number = m. The specific future transmission time interval (T1) may denote a timepoint at which the subframe number is larger by "i" than that of T0. A method for obtaining a timing advance value at a predetermined transmission time interval T (Frame number = k, Subframe number = l) by applying linear interpolation to the timing advance values at T0 and T1 may be as follows.

In the above operation S401, the UE 300 may receive at least one piece of the second satellite information 312 together with the first satellite information 311. The first satellite information 311 may include information about a current satellite, wherein the information about the current satellite may include at least one of position information or speed information of the current satellite 301 that is currently communicating with the UE at T0. The information regarding the position of the current satellite 301 may include $P_{sat_0}=(x_{sat_0}, y_{sat_0}, z_{sat_0})$. The second satellite information 312 may include information about a future satellite, wherein the information about the future satellite may include at least one of position information, speed information, acceleration information, and direction information of a future satellite 302 that is expected to communicate with the UE at specific transmission time interval (T1). The information regarding the position of the future satellite 302 at the specific future transmission time interval (T1) may include $P_{sat_1}=(x_{sat_1}, y_{sat_1}, z_{sat_1})$.

As the result of operation S403, when one piece of the second satellite information is included in the signal, the UE 300 may calculate a current timing advance value ($TA_{sat_0}$) and a timing advance value ($TA_{sat_1}$) at a specific future time interval in operation S404.

First, the UE 300 may utilize GNSS to measure the position of the UE 300. The position of the UE may be indicated by $P_{ue}$. The current timing advance value ($TA_{sat_0}$) may imply the timing advance value between the UE 300 and the current satellite 301. The current timing advance value ($TA_{sat_0}$) may be obtained through the following relationship between the current satellite position ($P_{sat_0}=(x_{sat_0}, y_{sat_0}, z_{sat_0})$) and the position ($P_{ue}$) of the UE 300.

$$TA_{sat_0} = |P_{ue} - P_{sat_0}| \qquad - (1)$$

The timing advance value ($TA_{sat_1}$) at the specific future time interval may denote the timing advance value between the UE 300 and the future satellite 302. The timing advance value ($TA_{sat_1}$) at the specific future time interval (T1) may be obtained from the following relationship between the future satellite position ($P_{sat_1}=(x_{sat_1}, y_{sat_1}, z_{sat_1})$) and the position ($P_{ue}$) of the UE 300.

$$TA_{sat_1} = |P_{ue} - P_{sat_1}| \qquad - (2)$$

In operation S405, the timing advance value to be applied for each transmission time interval (T) may be obtained using the following relationship. TA(k,l) denotes the timing advance value to be applied at the transmission time interval T (frame number = k, subframe number = l).

$$TA(k,l)=TA_{sat_0}\frac{(10n+m+i)-(10k+l)}{(10n+m+i)-(10n+m)}+TA_{sat_1}\frac{(10k+l)-(10n+m)}{(10n+m+i)-(10n+m)} \quad -(3)$$

Thereafter, the UE 300 may transmit and receive signals (or data) by applying the calculated timing advance value (TA(k,l)) at the transmission time interval T (frame number = k, subframe number = l).

FIG. 5B illustrates a method of calculating a timing advance value by using linear interpolation when a signal received by the UE includes first satellite information and two or more pieces of second satellite information.

The current transmission time interval (T0) may denote a timepoint at which frame number = n and subframe number = m. Future specific transmission time interval (T1) may denote a timepoint at which the subframe number is larger by "i" than that of T0. Another future specific transmission time interval T2 may denote a timepoint at which the subframe number is larger by "i" than that of T1. In other words, i may denote an interval between the current transmission time interval (T0) and the future specific transmission time interval (T1), and between the future specific transmission time interval (T1) and the other future specific transmission time interval T2. While FIG. 5B will be described with reference to the case of receiving two pieces of second satellite information 522 and 523, the disclosure is not limited thereto and may be equally applicable to the case of receiving more than two pieces of second satellite information.

In operation S401, the UE 300 may receive the at least one piece of the second satellite information 312 together with the first satellite information 311.

The first satellite information 311 may include information about a current satellite, wherein the information about the current satellite may include at least one of position information or speed information of the current satellite 301 that is currently communicating with the UE at the transmission time interval (T0). The information regarding the position of the current satellite 301 may include $P_{sat_0}=(x_{sat_0},y_{sat_0},z_{sat_0})$.

The second satellite information 312 and 313 may include information about a future satellite, wherein the information about the future satellite may include at least one of position information, speed information, acceleration information, or direction information of the future satellites 302 and 303 that are expected to communicate with the UE at the future specific transmission time intervals (T1, T2). In T1, the position information of the future satellite 302 may include $P_{sat_1}=(x_{sat_1},y_{sat_1},z_{sat_1})$. The information regarding the position of the future satellite 303 at T2 may include $P_{sat_2}=(x_{sat_2},y_{sat_2},z_{sat_2})$.

In the above operation S403, the UE 300 may determine whether two or more pieces of the second satellite information are included in the signal. As a result of the determination, when there are two or more pieces of second satellite information included in the signal, the UE 300 may calculate an elevation angle for each satellite by using the GNSS information of the UE, the position information of the current satellite 301 included in the first satellite information 311, the position information of the future satellite 302 at the future specific transmission time interval (T1) included in the (2-1)th satellite information 312, and the position information of the future satellite 303 in another future specific transmission time interval T2 included in the (2-2)th satellite information 313 in operation S406. The elevation angle for each satellite may be calculated using the elevation angle calculation method of the UE described in FIG. 7 below, and the elevation angle calculation method is not limited thereto.

In case that the elevation angle of the current satellite 301 or the elevation angle of the future satellite 303 at the farthest transmission time interval among the multiple pieces of second satellite information 302 and 303 has the largest elevation angle, the UE 300 may calculate the current timing advance value ($TA_{sat_0}$) and the timing advance value ($TA_{sat_1}$) at the specific future time interval (T1) in operation S410.

First, the UE 300 may utilize GNSS to measure the position of the UE 300. The position of the UE may be indicated by $P_{ue}$.

The current timing advance value ($TA_{sat_0}$) may denote a timing advance value between the UE 300 and the current satellite 301. The current timing advance value ($TA_{sat_0}$) may be obtained through the following relationship between the current satellite position ($P_{sat_0}=(x_{sat_0},y_{sat_0},z_{sat_0})$) and the position ($P_{ue}$) of the UE 300.

$$TA_{sat_0}=|P_{ue}-P_{sat_0}| \quad -(4)$$

The timing advance value ($TA_{sat_1}$) at the specific future time interval (T1) may denote the timing advance value between the UE 300 and the future satellite 302. The timing advance value ($TA_{sat_1}$) at the specific future time interval (T1) may be obtained from the following relationship between the future satellite position ($P_{sat_1}=(x_{sat_1},y_{sat_1},z_{sat_1})$) and the position ($P_{ue}$) of the UE 300.

$$TA_{sat_1}=|P_{ue}-P_{sat_1}| \quad -(5)$$

In operation S411, the timing advance value to be applied for each transmission time interval (T) may be obtained by linear interpolation as follows. TA(k,l) denotes the timing advance value to be applied at the transmission time interval T (frame number = k, subframe number = l).

$$TA(k,l)=TA_{sat_0}\frac{(10n+m+i)-(10k+l)}{(10n+m+i)-(10n+m)}+TA_{sat_1}\frac{(10k+l)-(10n+m)}{(10n+m+i)-(10n+m)} \quad -(6)$$

Thereafter, the UE 300 may transmit and receive signals (or data) by applying the calculated timing advance value (TA(k,l)) at the transmission time interval T (frame number = k, subframe number = l).

FIG. 5C illustrates a method of calculating a timing advance value by using quadratic interpolation when the signal received by the UE includes first satellite information and two or more pieces of second satellite information.

The current transmission time interval (T0) may denote a timepoint at which frame number = n and subframe number = m. Future specific transmission time interval (T1) may be a timepoint at which the subframe number is larger by "i" than that of T0. Another future specific transmission time interval T2 may denote a timepoint at which the subframe number is larger by "i" than that of T1. In other words, i may denote an interval between the current transmission time interval (T0) and the future specific transmission time interval (T1), and between the future specific transmission time interval (T1) and the other future specific transmission time interval T2. While FIG. 5C will be described with reference to the case of receiving two pieces of second satellite information 312 and 313, the disclosure is not limited thereto and may be equally applicable to the case of receiving more than two pieces of second satellite information.

In operation S401, the UE 300 may receive at least one piece of the second satellite information 312 and 313 together with the first satellite information 311.

The first satellite information 311 may include information about the current satellite, wherein the information about the current satellite may include at least one of position information or speed information of the current satellite 301 that is currently communicating with the UE at T0. The information regarding the position of the current satellite 301 may include $P_{sat_0}=(x_{sat_0},y_{sat_0},z_{sat_0})$.

The second satellite information 312 and 313 may include information about a future satellite, wherein the information about the future satellite may include at least one of position information, speed information, acceleration information, or direction information of the future satellites 302 and 303 that are expected to communicate with the UE at a specific future transmission time interval (T1, T2). The information regarding the position of the future satellite 302 at the future transmission time interval (T1) may include $P_{sat_1}=(x_{sat_1},y_{sat_1},z_{sat_1})$. The information regarding the position of the future satellite 303 in another future transmission time interval T2 may include $P_{sat_2}=(x_{sat_2},y_{sat_2},z_{sat_2})$.

In the above operation S403, the UE 300 may determine whether two or more pieces of the second satellite information are included in the signal. As a result of the determination, when there are two or more pieces of second satellite information included in the signal, the UE 300 may calculate an elevation angle for each satellite by using the GNSS information of the UE, the position information of the current satellite 301 included in the first satellite information 311, the position information of the future satellite 302 at the future specific transmission time interval (T1) included in the (2-1)th satellite information 312, and the position information of the future satellite 303 in another future specific transmission time interval T2 included in the (2-2)th satellite information 313 in operation S406. The elevation angle for each satellite may be calculated using the elevation angle calculation method of the UE described in FIG. 7 below, and the elevation angle calculation method is not limited thereto.

In case that the elevation angle of the current satellite 301 or the elevation angle of the future satellite 303 among the multiple second satellites 302 and 303 at the farthest transmission time interval does not have the largest elevation angle, the UE 300 may calculate a current timing advance value ($TA_{sat_0}$), a timing advance value ($TA_{sat_1}$) in the specific future time interval (T1), and a timing advance value ($TA_{sat_2}$) in another specific future time interval T2 in the above operation S408.

First, the UE 300 may utilize GNSS to measure the position of the UE 300. The position of the UE may be indicated by $P_{ue}$.

The current timing advance value ($TA_{sat_0}$) may denote a timing advance value between the UE 300 and the current satellite 301. The current timing advance value ($TA_{sat_0}$) may be obtained through the following relationship between the current satellite position ($P_{sat_0}=(x_{sat_0},y_{sat_0},z_{sat_0})$) and the position ($P_{ue}$) of the UE 300.

$$TA_{sat_0}=|P_{ue}-P_{sat_0}| \quad -(7)$$

The timing advance value ($TA_{sat_1}$) at the specific future time interval (T1) may denote the timing advance value between the UE 300 and the future satellite 302. The timing advance value ($TA_{sat_1}$) at the specific future time interval (T1) may be obtained from the following relationship between the future satellite position ($P_{sat_1}=(x_{sat_1},y_{sat_1},z_{sat_1})$) and the

position ($P_{ue}$) of the UE 300.

$$TA_{sat_1}=|P_{ue}-P_{sat_1}| \quad -(8)$$

The timing advance value ($TA_{sat_2}$) at the specific future time interval T2 may denote the timing advance value between the UE 300 and the future satellite 303. The timing advance value ($TA_{sat_2}$) at the specific future time interval T2 may be obtained by the following relationship between the future satellite position ($P_{sat_2}=(x_{sat_2},y_{sat_2},z_{sat_2})$) and the position ($P_{ue}$) of the UE 300.

$$TA_{sat_2}=|P_{ue}-P_{sat_2}| \quad -(9)$$

In operation S409, the timing advance value to be applied for each transmission time interval (T) may be calculated by applying quadratic interpolation. TA(k,l) denotes the timing advance value to be applied at the transmission time interval T (frame number = k, subframe number = l).

$$TA(k,l)=TA_{sat_0}L_0(k,l)+TA_{sat_1}L_1(k,l)+TA_{sat_2}L_2(k,l) \quad -(10)$$

$$L_0(k,l)=\frac{((10k+l)-(10n+m+i))((10k+l)-(10n+m+2i))}{((10n+m)-(10n+m+i))((10n+m)-(10n+m+2i))} \quad -(11)$$

$$L_1(k,l)=\frac{((10k+l)-(10n+m))((10k+l)-(10n+m+2i))}{((10n+m+i)-(10n+m))((10n+m+i)-(10n+m+2i))} \quad -(12)$$

$$L_2(k,l)=\frac{((10k+l)-(10n+m))((10k+l)-(10n+m+i))}{((10n+m+2i)-(10n+m))((10n+m+2i)-(10n+m-i))} \quad -(13)$$

Thereafter, the UE 300 may transmit and receive signals (or data) by applying the calculated timing advance value (TA(k,l)) at the transmission time interval T (frame number = k, subframe number = l).

Doppler shift information may include Doppler shift values. Hereinafter, in order to help understanding of the disclosure, an example will be written in which a Doppler shift value for a current satellite and a Doppler shift value for a future satellite are calculated. Specifically, linear interpolation is applied between the Doppler shift value for the current satellite and the Doppler shift value for the future satellite so as to calculate the Doppler shift value applied for each transmission time interval, and then a method of transmitting and receiving a signal by applying the calculated Doppler shift value is explained. However, this is merely an example to help understanding of the disclosure, and the disclosure is not limited thereto.

FIG. 6 is a flowchart illustrating a sequence in which Doppler shift correction is performed for each transmission time interval in an NTN to which the disclosure is applicable. In the case of the Doppler shift, the variance of Doppler shift is greatest at the point where the elevation angle is greatest. Therefore, as an embodiment in which Doppler shift correction is performed, Doppler shift values may be calculated and applied for each transmission time interval by applying linear interpolation between the Doppler shift values regardless of the trajectory of the satellite. The method of performing Doppler shift correction is as follows.

In operation S601, the UE may, upon receiving a signal including satellite information, determine whether the satellite information included in the received signal includes only the first satellite information 311 or includes at least one piece of the second satellite information 312 together with the first satellite information 311.

In operation S602, when the signal includes only the first satellite information 311, the Doppler shift correction may be performed using only the measurement information based on the GNSS of the UE and the current satellite speed information included in the first satellite information 311, in the same manner as in conventional techniques.

In operation S603, when the received signal includes the first satellite information 311 and at least one piece of the second satellite information 312, the UE may calculate Doppler shift values ($D_{sat_0}$, $D_{sat_1}$) for each satellite position (or for each transmission time interval) by using the measurement value through the GNSS of the UE, the speed information of the current satellite 311 included in the first satellite information 311, and the speed information of the future satellite 302 at a specific future transmission time interval (T1) included in the second satellite information 312.

Thereafter, in operation S604, a Doppler shift value for each transmission time interval may be calculated by applying linear interpolation between the respective Doppler shift values ($D_{sat_0}$, $D_{sat_1}$), and the calculated Doppler shift value may be applied for each transmission time interval.

FIG. 7 illustrates a specific embodiment in which Doppler shift correction is performed for each transmission time interval in an NTN to which the disclosure is applicable.

As an embodiment of Doppler shift correction, when interpolating between Doppler shift values is performed, linear interpolation may be applied to calculate Doppler shift values for each transmission time interval, regardless of the satellite trajectory. Thereafter, the calculated Doppler shift values may be applied.

The current transmission time interval (T0) may denote a timepoint at which frame number = n and subframe number = m. The future specific transmission time interval (T1) may denote a timepoint at which the subframe number is larger by "i" than that of T0. In other words, i may denote an interval between the current transmission time interval (T0) and the future specific transmission time interval (T1).

In operation S601, the UE may, upon receiving the signal including satellite information, determine whether the satellite information included in the received signal includes at least the second satellite information 312 in addition to the first satellite information 311.

The first satellite information 311 may include information about a current satellite, wherein the information about the current satellite may include at least one of position information or satellite speed (or velocity) information of the current satellite 301 that is currently communicating with the UE at T0. The information regarding the position of the current satellite 301 at the current transmission time interval (T0) may include $P_{sat_0}=(x_{sat_0},y_{sat_0},z_{sat_0})$.

The second satellite information 312 may include information about a future satellite, wherein the information about the future satellite may include at least one of position information of the future satellite 302 that is expected to communicate with the UE at the future specific transmission time interval (T1), or satellite speed (or velocity) information. The information regarding the position of the future satellite 302 at the future specific transmission time interval (T1) may include $P_{sat_1}=(x_{sat_1},y_{sat_1},z_{sat_1})$.

In operation S603, the UE 300 may perform Doppler shift correction for each transmission time interval, based on the GNSS information of the UE, the position information of the current satellite 301 and the satellite speed information included in the first satellite information 311, and the position information of the future satellite 302 and the satellite speed information included in the second satellite information 312. Specifically, the UE may calculate a Doppler shift value for each transmission time interval T by applying linear interpolation to the current Doppler shift value and the future Doppler shift value.

0. Calculate the distance (d1, d2) between a UE and a satellite

The UE 300 may calculate the distance d1 between the UE and a current satellite and the distance d2 between the UE and a future satellite. The GNSS of the UE 300 may be utilized to obtain information $P_{ue}$ regarding the position of the UE 300.

The current satellite distance d1 may denote the distance between the UE 300 and the current satellite 301 at the current transmission time interval (T0). The d1 may be calculated based on information $P_{sat_0}=(x_{sat_0},y_{sat_0},z_{sat_0})$ regarding the position of the UE 300 obtained by using the GNSS of the UE 300 and the position of the current satellite 301 included in the first satellite information 311.

The future satellite distance d2 may denote the distance between the UE 300 and the current satellite 301 at the future transmission time interval (T1). The d2 may be calculated based on information $P_{sat_1}=(x_{sat_1},y_{sat_1},z_{sat_1})$ regarding the position of the UE 300 obtained by using the GNSS of the UE 300 and the position of the future satellite 301 included in the second satellite information 311.

1. Calculation of the elevation angle of the UE ($e_{sat_0}$, $e_{sat_1}$)

The UE 300 may calculate a current elevation angle ($e_{sat_0}$) and a future elevation angle ($e_{sat_1}$). $R_E$ denotes the radius of the Earth, and h denotes the altitude of a satellite.

The current elevation angle ($e_{sat_0}$) denotes the current elevation angle between the UE 300 and the satellite 301 at the current transmission time interval (T0), and the current elevation angle may be calculated using the following equation.

$$d1=\sqrt{R_E^{\,2}\ \sin e_{sat_0}^{\ 2}+h^2+2hR_E}-R_E\sin e_{sat_0} \quad (14)$$

The future elevation angle ($e_{sat_1}$) denotes the elevation angle between the UE 300 and the future satellite 302 at the future specific transmission time interval (T1), and the future elevation angle may be calculated using the equation below.

$$d2=\sqrt{R_E{}^2\ \text{sine}_{sat_1}{}^2+h^2+2hR_E}-R_E\text{sine}_{sat_1} \quad -(15)$$

2. Calculation of the Doppler shift value ($D_{sat_0}$, $D_{sat_1}$)

The UE 300 may calculate a current Doppler shift value ($D_{sat_0}$) and a future Doppler shift value ($D_{sat_1}$). $R_E$ denotes the radius of the Earth, h denotes the altitude of a satellite, c denotes the speed of light, $f_c$ denotes the center frequency, and $v_{sat}$ denotes the satellite velocity.

The current Doppler shift value ($D_{sat_0}$) may denote the Doppler shift value between the UE 300 and the current satellite 301 at the current transmission time interval (T0), and may be obtained through the following equation.

$$D_{sat_0}=(\frac{v_{sat}}{c})(\frac{R}{R+h}\cos e_{sat0})f_c \quad -(16)$$

The future Doppler shift value ($D_{sat_1}$) may denote a Doppler shift value between the UE 300 and the future satellite 302 at the future specific transmission time interval (T1), and may be obtained via the following equation.

$$D_{sat_1}=(\frac{v_{sat}}{c})(\frac{R}{R+h}\cos e_{sat1})f_c \quad -(17)$$

3. Calculation of Doppler shift values for each transmission time interval

The UE 300 may calculate a Doppler shift value for each transmission interval by applying linear interpolation to the acquired current Doppler shift value and future Doppler shift value.

D(k,l) denotes the Doppler shift value to be applied at a predetermined transmission time interval T (frame number = k, subframe number = l), and may be obtained by the following equation.

$$D(k,l)=D_{sat_0}\frac{(10n+m+i)-(10k+l)}{(10n+m+i)-(10n+m)}+D_{sat_1}\frac{(10k+l)-(10n+m)}{(10n+m+i)-(10n+m)} \quad -(18)$$

4. Transmission and reception of signals (or data) for each transmission time interval

Thereafter, the UE 300 may transmit and receive signals (or data) by applying the calculated Doppler shift value (D(k,l)) at the transmission time interval T (frame number = k, subframe number = l).

In the following, various embodiments to which the disclosure is applicable will be described. Timing advance information may include timing advance values, and Doppler shift information may include Doppler shift values. The various embodiments described below will be described specifically using timing advance values and Doppler shift values as examples to help understanding of the disclosure, but embodiments of the disclosure are not limited thereto.

FIG. 8 illustrates an embodiment in which a signal is transmitted and received based on system information in an NTN to which the disclosure is applicable.

In FIG. 8, a network node may include a satellite in the NTN. Specifically, the satellite may include a first satellite 301 according to an embodiment of the disclosure. The satellite may perform the functions of a DU or CU in the NR, or may perform independent functions of a base station. When a satellite of the disclosure performs the functions of a base station, the satellite may be referred to as a base station or NTN base station. The network nodes may be applied throughout the specification.

In operation S801, the UE 800 may receive system information (system information block (SIB)) from a network node 810. The system information may include system information block 19 (SIB19). The SIB may include current information of the satellite (e.g., satellite type, satellite position, satellite speed, etc.) broadcasting the SIB, and additional satellite information. Alternatively, the SIB may include the satellite information (e.g., satelliteInformation) as described throughout the specification, wherein the satellite information may include the first satellite information 301 or at least one piece of the second satellite information 302 and 303.

In operation S802, the UE 800 may calculate a timing advance value or a Doppler shift value for each transmission time interval, based on the satellite information included in the system information block (SIB) from the network node 810. The timing advance value and the Doppler shift value may be calculated by any of the methods described above. The timing advance value and the Doppler shift value may be calculated independently or in parallel. Alternatively, the timing advance value may be calculated first and then the Doppler shift value, or the order may be reversed.

In operation S803, the UE 800 may transmit or receive the signal (or data) by applying at least one of the timing advance value or Doppler shift value calculated for each transmission time interval.

FIG. 9 illustrates an embodiment in which a signal is transmitted and received based on a reference signal in an NTN to which the disclosure is applicable.

In operation S901, the UE 900 may receive a radio resource control (RRC) message from a network node 910. In this case, the RRC message may include, but is not necessarily limited to, RRC Connection Reconfiguration, RRC Reconfiguration, and the like. The RRC message may, before the UE 900 receives a reference signal, provide satellite-related configuration information (or specific values) to be included in the reference signal.

The RRC message may include information (e.g., rsSatelliteInfoContainTTIInterval) regarding an interval of the reference signal containing the satellite information. Since it is difficult to include the satellite information in all reference signals, the information about the interval of the reference signal including the satellite information is provided to enable efficient reception of the satellite information.

The RRC message may include information (e.g., startSubframe, startTTI) regarding a timepoint at which a timing advance or Doppler shift correction is started. Specifically, the RRC message may include information regarding an absolute timepoint (e.g., TTI, subframe, slot) at which the timing advance or Doppler shift correction is started.

The RRC message may also include information (e.g., referenceSignalType) about the reference signal containing the satellite information. Specifically, the RRC message may include information about a reference signal to include the satellite information therein, and information about whether the satellite information is to be included in the DMRS or in another reference signal.

In operation S902, the UE 900 may receive a reference signal from the network node 910. The reference signal may include DMRS, CSI-RS, or the like. The reference signal may include the satellite information as described above.

In operation S903, the UE 900 may obtain the satellite information based on the reference signal. As described above, the satellite information may include the first satellite information 301 and at least one piece of the second satellite information 302 and 303.

In operation S904, the UE 900 may transmit and receive the signal (or data) by calculating and applying at least one of a timing advance value or a Doppler shift value for each transmission time interval, based on the reference signal.

FIG. 10 illustrates another embodiment in which a signal is transmitted and received based on a reference signal in an NTN to which the disclosure is applicable.

In operation S1001, the UE 1000 may receive downlink control information (DCI) from a network node 1010. The DCI may, before the UE 1000 receives a reference signal, provide satellite-related configuration information (or specific values) to be included in the reference signal.

The DCI may include information (e.g., rsSatelliteInfoContainTTIInterval) regarding an interval of the reference signal containing the satellite information. Since it is difficult to include the satellite information in all reference signals, the information about the interval of the reference signal including the satellite information is provided to enable efficient reception of the satellite information.

The DCI may include information (e.g., startSubframe, startTTI) regarding a timepoint at which a timing advance or Doppler shift correction is started. Specifically, the DCI may include information regarding an absolute timepoint (e.g., TTI, subframe, slot) at which the timing advance or Doppler shift correction is started.

The DCI message may also include information (e.g., referenceSignalType) regarding the reference signal containing the satellite information. Specifically, the DCI message may include information about a reference signal to include the satellite information therein, and information about whether the satellite information is to be included in the DMRS or in another reference signal.

In operation S1002, the UE 1000 may receive a reference signal from the network node 1010. The reference signal may include DMRS, CSI-RS, or the like. The reference signal may include satellite information as described above.

In operation S1003, the UE 1000 may obtain satellite information based on the reference signal. As previously described, the satellite information may include the first satellite information 301 and at least one piece of the second satellite information 302 and 303.

In operation S1004, the UE 1000 may transmit and receive the signal (or data) by calculating and applying at least one of a timing advance value or a Doppler shift value for each transmission time interval, based on the reference signal.

FIG. 11 illustrates an embodiment in which a signal is transmitted and received based on a radio resource control (RRC) message in an NTN to which the disclosure is applicable.

According to an embodiment of the disclosure, a UE 1100 and a network node 1110 may trigger a timing advance correction mechanism based on the RRC message. The timing advance correction mechanism may include a process of obtaining timing advance information for each transmission time interval, based on the first satellite information and the at least one piece of second satellite information, as described above, and transmitting and receiving a signal by using the determined timing advance information.

In operation S1101, the UE 1100 may request timing advance correction-related information from the network node 1110. For example, the UE 1100 may transmit an RRC message or a timing advance request message to the network node 1110. The request may include the following information.

- Transmission period (e.g., reportPeriod): Information regarding an RRC message transmission period of the network node 1110 when the network node 1110 transmits satellite information through the RRC message
- Satellite information type (e.g., satelliteInformaionType): Information (or an associated Type ID) related to the number of second satellite information, which is included in the satellite information transmitted by the network node 1110. For example, the UE 1100 may configure the satelliteInformationType as "1" to request the network node 1110 to transmit an RRC message by including one piece of the second satellite information therein.

In operation S1102, the UE 1100 may receive the RRC message from the network node 1110. The RRC message may include the following information.

- Satellite information (e.g., satelliteInformaion): The satellite information is described as above, wherein the satellite information may include at least one of the first satellite information or the second satellite information.
- The type of satellite information (e.g., satelliteInformaionType): This may include information (or an associated Type ID) related to the number of second satellite information included in the satellite information. For example, when the satelliteInformaionType is configured as "1", the UE 1100 may know that one piece of the second satellite information is included in the satellite information.
- A correction start time (e.g., startTTI): Information regarding an absolute timepoint at which the UE 1000 starts a timing advance correction when the correction is to be performed. This information may include a TTI value, or may include a value of a frame, subframe, or slot.
- Transmission period (e.g., reportPeriod): Information regarding an RRC message transmission period of a network node when the network node transmits satellite information through the RRC message.

In operation S1103, the UE 1100 may transmit and receive signals by performing timing advance correction for each transmission time interval according to the method described above.

The UE 1100 may know, by a value of the transmission period (reportPeriod), the transmission period of the RRC message including the satellite information transmitted by the network node 1110. For example, the RRC message transmission period may denote a time from receiving the RRC message in operation S1102 to receiving the RRC message in operation S1104 thereafter.

The UE 1100 may calculate a timing advance value for each transmission time interval, based on the first satellite information and the at least one piece of second satellite information included in the satelliteInformation.

Based on the satellite information type (satelliteInformationType), the UE 1100 may know the number of second satellite information included in the satellite information. Based on the satelliteInformationType, the UE 1100 may determine an interpolation to be applied to calculate the timing advance value. For example, whether to apply linear interpolation or quadratic interpolation may differ based on the number of second satellite information. In this case, when the satelliteInformationType is configured as "1", the linear interpolation may be applied to calculate the timing advance value for each transmission time interval because the satellite information includes one piece of the second satellite information. When the satelliteInformationType is configured as "2", the satellite information includes two pieces of the second satellite information, and in this case, the elevation values of the current satellite and the future satellite may be compared to determine whether to apply linear interpolation or quadratic interpolation.

The UE 1100 may start a timing advance correction based on a correction start timepoint (startTTI). For example, when the startTTI value is n, the timing advance correction may begin at the nth TTI.

Thereafter, the UE 1100 may calculate and apply a timing advance value for each transmission time interval to transmit and receive signals.

In operation S1104, the UE 1000 may transmit an RRC complete message to the network node 1110.

In operation S1105, the network node 1110 may transmit the RRC message to the UE 1000. In operation S1105, the RRC message may include satellite information (e.g., satelliteInformaion), satellite information type (e.g., satelliteInformaionType), an interpolation start timepoint (e.g., startTTI), and information regarding a transmission period (e.g., reportPeriod). Here, the RRC message may include the same information as that included in the RRC message in operation S1102, or may include information modified from that.

FIG. 12 illustrates another embodiment in which a signal is transmitted and received based on an RRC message in an NTN to which the disclosure is applicable.

According to an embodiment of the disclosure, a UE 1200 and a network node 1210 may be requested to disable the timing advance correction mechanism for each transmission time interval. The timing advance correction mechanism may include a process of obtaining timing advance information for each transmission time interval based on first satellite information and at least one piece of second satellite information, as described above, and transmitting and receiving a signal by using the determined timing advance information.

In operation S1201, the UE 1220 may request the network node 1210 to disable the timing advance correction mechanism for each transmission time interval. For example, the UE 1220 may transmit a timing advance interpolation information disable request message to the network node 1210.

Upon receiving the disabling request, the network node 1210 may stop transmission of the RRC message containing the timing advance correction-related information.

In operation S1202, the network node 1210 may transmit a message of completion of disabling of a timing advance correction mechanism to the UE 1200. For example, the network node may transmit a timing advance interpolation information disable complete message.

In operation S1203, upon receiving the timing advance correction disable complete message for each transmission time interval, the UE 1200 may no longer perform timing advance correction for each transmission time interval and may transmit and receive signals according to a conventional manner. For example, the UE may transmit and receive signals based on information about the UE position and the current satellite measured using the GNSS of the UE.

FIG. 13 illustrates another embodiment in which a signal is transmitted and received based on an RRC message in an NTN to which the disclosure is applicable.

According to an embodiment of the disclosure, a UE 1300 and a network node 1310 may trigger a Doppler shift correction mechanism based on an RRC message. The Doppler shift correction mechanism may include a process of obtaining Doppler shift information for each transmission time interval, based on the first satellite information and the at least one piece of second satellite information, as described above, and transmitting and receiving a signal by using the determined timing Doppler shift information.

In operation S1301, the UE 1300 may request timing advance correction- related information from the network node 1310. For example, the UE 1300 may transmit an RRC message or a timing advance request message to the network node 1310. The request may include the following information.

- Transmission period (e.g., reportPeriod): Information regarding an RRC message transmission period of the network node 1310 when the network node 1310 transmits satellite information through the RRC message.

In this case, unlike in the case of the timing advance correction mechanism illustrated in FIG. 11, the information about the type of satellite information (e.g., satelliteInformationType) may not be included. The satelliteInformationtype is a value indicating the number of second satellite information included in the satellite information, because unlike in the case of calculating the timing advance value, one interpolation method may be applied in calculation of the Doppler shift value regardless of the number of second satellite information.

In operation S1302, the UE 1300 may receive an RRC message from the network node 1310. The RRC message may include the following information.

- Satellite information (e.g., satelliteInformaion): The satellite information is as described above, wherein the satellite information may include at least one of the first satellite information or the second satellite information.
- Interpolation start timepoint (e.g., startTTI): Information regarding an absolute timepoint at which the UE 1300 starts a correction when the Doppler shift interpolation is to be performed. This information may include a TTI value, or may include a value of a frame, subframe, or slot.
- Transmission period (e.g., reportPeriod): Information about an RRC message transmission period of a network node when a network node transmits satellite information through the RRC message.

In operation S1303, the UE 1300 may transmit and receive signals for each transmission time interval by performing and applying the Doppler shift correction according to the method described above.

The UE 1300 may know, by a value of the transmission period (reportPeriod), the transmission period of the RRC message including the satellite information transmitted by the network node 1310. For example, the RRC message transmission period may denote a time from receiving the RRC message in operation S1302 to receiving the RRC message in operation S1305 thereafter.

The UE 1300 may calculate a Doppler shift value for each transmission time interval, based on the first satellite information and the at least one piece of second satellite information included in the satelliteInformation.

The UE 1300 may start a Doppler shift correction based on the interpolation start timepoint (startTTI). For example, when the startTTI value is n, the Doppler shift correction may begin at the nth TTI.

Thereafter, the UE 1300 may calculate a Doppler shift value for each transmission time interval and apply the calculated value to each transmission time interval to transmit and receive signals.

In operation S1304, the UE 1300 may transmit an RRC complete message to the network node 1310.

In operation S1305, the network node 1310 may transmit the RRC message to the UE 1300. In operation S1305, the RRC message may include satellite information (e.g., satelliteInformaion), a correction start timepoint (e.g., startTTI), and information regarding a transmission period (e.g., reportPeriod). Here, the RRC message may include the same information as that included in the RRC message received in operation S1102, or may include information modified from that.

FIG. 14 illustrates another embodiment in which a signal is transmitted and received based on an RRC message in an NTN to which the disclosure is applicable.

According to an embodiment of the disclosure, a UE 1400 and a network node 1410 may be requested to disable the Doppler shift correction mechanism. The Doppler shift correction mechanism may include a process of obtaining Doppler shift information for each transmission time interval based on the first satellite information and the at least one piece of second satellite information, as described above, and transmitting and receiving a signal by using the determined timing Doppler shift information.

In operation S1401, the UE 1400 may request the network node 1410 to disable the Doppler shift correction mechanism. For example, the UE 1400 may transmit a Doppler shift interpolation information disable request message to the network node 1410.

Upon receiving the disabling request, the network node 1410 may stop transmitting RRC messages containing information related to the Doppler shift correction.

In operation S1402, the network node 1410 may transmit a message of completion of disabling of a Doppler shift correction mechanism to the UE 1400. For example, the network node may transmit a Doppler shift interpolation information disable complete message.

In operation S1403, the UE 1400, upon receiving the message of completion of disabling of the Doppler shift correction mechanism, may no longer apply the Doppler shift correction mechanism and may transmit and receive signals according to a conventional manner. For example, signals may be transmitted and received based on information about the UE position and the current satellite measured using the GNSS of the UE.

FIG. 15 illustrates a method of driving a timer in an NTN to which the disclosure is applicable.

According to an embodiment of the disclosure, a validity period may be configured to improve the validity of satellite information in satellite communications. For example, the NTN may configure a first validity duration 1502 for validity management. The first validity duration 1502 may perform a kind of timer function that starts from a timepoint at which a signal including satellite information is received. When no signal including satellite information is received during the first validity duration 1502, an additional correction may be made to the existing timing advance interpolation or Doppler shift interpolation value to transmit and receive a signal (or data). When no signal including new satellite information is received until the first validity duration 15022 expires, the previously used satellite information may be discarded and network access may be terminated.

According to an embodiment of the disclosure, a second validity duration 1503 may be included in the case of applying timing advance or Doppler shift interpolation. When no signal including satellite information is received during the second validity duration 1503, a timepoint at which the satellite information validity period is applied may be changed. Specifically, when at least one piece of the second satellite information is included in the signal including satellite information, the nearest timepoint associated with the second satellite information may be configured as the start timepoint of the validity duration.

In addition, according to an embodiment of the disclosure, when timing advances or Doppler shift interpolation is applied, an additional timer called interpolated validity duration 1504 may be configured. The start timepoint of the interpolated validity duration 1504 may be configured to be the same as the timepoint at which the second validity duration 1503 ends, and the validity of the satellite information may be determined to have expired when the interpolated validity duration 1504 expires. The interpolated validity duration 1504 may be configured based on, but not limited to, the period of the signal including satellite information, and may be freely configured by the network within an allowable error range between the interpolated value and the actual value.

FIG. 16 illustrates a structure of a UE according to an embodiment of the disclosure.

Referring to FIG. 16, the UE according to an embodiment of the disclosure may include a transceiver 1605, a controller 1610, and a storage 1615. As used herein, the controller 1610 of the UE may be defined as a circuit, an application specific integrated circuit, or at least one processor.

The transceiver 1605 may transmit/receive signals. For example, the transceiver 1605 may transmit signals to a satellite or base station according to an embodiment of the disclosure and receive signals from the satellite or base station.

The controller 1610 may control the overall operation of the UE according to the embodiments proposed in the disclosure. For example, the controller 1610 may control signal flows between the respective blocks to perform operations according to the above-described drawings (or flowcharts or flow diagrams).

The storage 1615 may store at least one of information transmitted/received through the transceiver 1605 and information generated through the controller 1610.

FIG. 17 illustrates a structure of a network entity according to an embodiment of the disclosure.

In the disclosure, the network entity may include a satellite in an NTN. The satellite according to an embodiment of the disclosure may function as a DU or CU in NR or may function as an independent base station. In the case where the satellite of the disclosure functions as a base station, the satellite may be referred to as a base station or an NTN base station.

Referring to FIG. 17, the network entity according to an embodiment of the disclosure may include a transceiver 1705, a controller 1710, and a storage 1715. As used herein, the controller 1710 of the network entity may be defined as a circuit, an application specific integrated circuit, or at least one processor.

The transceiver 1705 may transmit/receive signals. For example, the transceiver 1705 may transmit signals to a UE according to an embodiment of the disclosure or may receive signals from the UE. Alternatively, the transceiver 1705 may transmit/receive signals to/from any other satellite via an inter-satellite link and may also perform multi-hop communication between satellites.

The controller 1710 may control the overall operation of the network entity according to the embodiments proposed in the disclosure. For example, the controller 1710 may control signal flows between the respective blocks to perform operations according to the above-described drawings (or flowcharts or flow diagrams).

The storage 1715 may store at least one of information transmitted/received through the transceiver 1705 and information generated through the controller 1710.

In methods of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

Furthermore, although exemplary embodiments of the disclosure have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system supporting a non-terrestrial network (NTN), the method comprising:

   receiving a signal including first satellite information and at least one piece of second satellite information from a first satellite providing a cell in which the terminal is located;
   based on the first satellite information and the at least one piece of second satellite information, determining at least one of timing advance (TA) information or Doppler shift information for each transmission time interval; and
   transmitting and receiving a signal, based on the determined at least one of the timing advance information or the Doppler shift information for each transmission time interval.

2. The method of claim 1, wherein the determining of the timing advance information further comprises determining the number of the second satellite information,

   wherein the first satellite information comprises at least one of position information or speed information of the first satellite, and
   wherein the second satellite information each comprises at least one of position information, speed information, acceleration information, or direction information of a second satellite in a specific transmission time interval.

3. The method of claim 2, further comprising:

   in case that the number of the second satellite information is one, determining the timing advance information by applying linear interpolation, based on the first satellite information and the second satellite information; and
   in case that the number of the second satellite information is two or more, calculating an elevation angle of a satellite for each transmission time interval,
   wherein, in case that the first satellite or a satellite in the farthest transmission time interval has a largest elevation angle, the timing advance information is determined by applying linear interpolation, and
   wherein, in case that the first satellite or the satellite in the farthest transmission time interval does not have a largest elevation angle, the timing advance information is determined by applying quadratic interpolation.

4. The method of claim 1, further comprising operating a first timer,

   wherein the first timer is operated based on the second satellite information in the shortest transmission time interval, and is terminated based on the second satellite information in the farthest transmission time interval, and
   wherein network access is terminated in case that a signal including new satellite information is not received while the first timer is operated.

5. The method of claim 4, further comprising operating a second timer,

   wherein the second timer starts to be operated after the first timer expires, and
   wherein the determined timing advance information or Doppler shift information is determined to be valid until the second timer expires.

6. The method of claim 1, wherein the Doppler shift information is determined by applying linear interpolation.

7. A method performed by a first satellite in a wireless communication system supporting a non-terrestrial network (NTN), the method comprising:

   generating a signal to be transmitted to a terminal located in a cell provided by the first satellite, the signal including first satellite information and at least one piece of second satellite information;
   transmitting the signal including the first satellite information and the at least one piece of second satellite information; and
   transmitting and receiving data for each transmission time interval, based on the first satellite information and the at least one piece of second satellite information.

8. The method of claim 7, wherein the first satellite information comprises at least one of position information or speed information of the first satellite, and

wherein the second satellite information each comprises at least one of position information, speed information, acceleration information, or direction information of a second satellite in a specific transmission time interval.

**9.** A terminal in a wireless communication system supporting a non-terrestrial network (NTN), the terminal comprising:

a transceiver configured to transmit and receive a signal; and
a controller connected to the transceiver,
wherein the controller is configured to perform control to receive a signal including first satellite information and at least one piece of second satellite information from a first satellite providing a cell in which the terminal is located, determine one of timing advance (TA) information or Doppler shift information for each transmission time interval, based on the first satellite information and the at least one piece of second satellite information, and transmit and receive a signal, based on the determined at least one of the timing advance information or the Doppler shift information for each transmission time interval.

**10.** The terminal of claim 9, wherein the controller is configured to perform control to determine the number of the second satellite information, and determine the timing advance information,

wherein the first satellite information comprises at least one of position information or speed information of the first satellite, and
wherein the second satellite information each comprises at least one of position information, speed information, acceleration information, or direction information of a second satellite in a specific transmission time interval.

**11.** The terminal of claim 10, wherein the controller is configured to perform control to, in case that the number of the second satellite information is one, determine the timing advance information by applying linear interpolation, based on the first satellite information and the second satellite information; and
wherein the controller is configured to perform control to calculate an elevation angle of a satellite for each transmission time interval in case that the number of the second satellite information is two or more, determine the timing advance information by applying linear interpolation in case that the first satellite or a satellite in the farthest transmission time interval has a largest elevation angle, and determine the timing advance information by applying quadratic interpolation in case that the first satellite or the satellite in the farthest transmission time interval does not have a largest elevation angle.

**12.** The terminal of claim 9, wherein the controller is configured to:

perform control to operate a first timer, wherein the first timer is operated based on the second satellite information in the shortest transmission time interval and terminated based on the second satellite information in the farthest transmission time interval, and network access is terminated in case that a signal including new satellite information is not received while the first timer is operated; and
perform control to operate a second timer, wherein the second timer starts to be operated after the first timer expires, and the determined timing advance information or Doppler shift information is determined to be valid until the second timer expires.

**13.** The terminal of claim 9, wherein the controller is configured to perform control to determine the Doppler shift information by applying linear interpolation.

**14.** A first satellite in a wireless communication system supporting a non-terrestrial network (NTN), the first satellite comprising:

a transceiver configured to transmit and receive a signal; and
a controller,
wherein the controller is configured to perform control to generate a signal to be transmitted to a terminal located in a cell provided by the first satellite, the signal including first satellite information and at least one piece of second satellite information, transmit the signal including the first satellite information and the at least one piece of second satellite information, and transmit and receive data for each transmission time interval, based on the first satellite information and the at least one piece of second satellite information.

**15.** The first satellite of claim 14, wherein the first satellite information comprises at least one of position information or speed information of the first satellite, and

wherein the second satellite information each comprises at least one of position information, speed information, acceleration information, or direction information of at least one second satellite in a specific transmission time interval.

FIG. 1

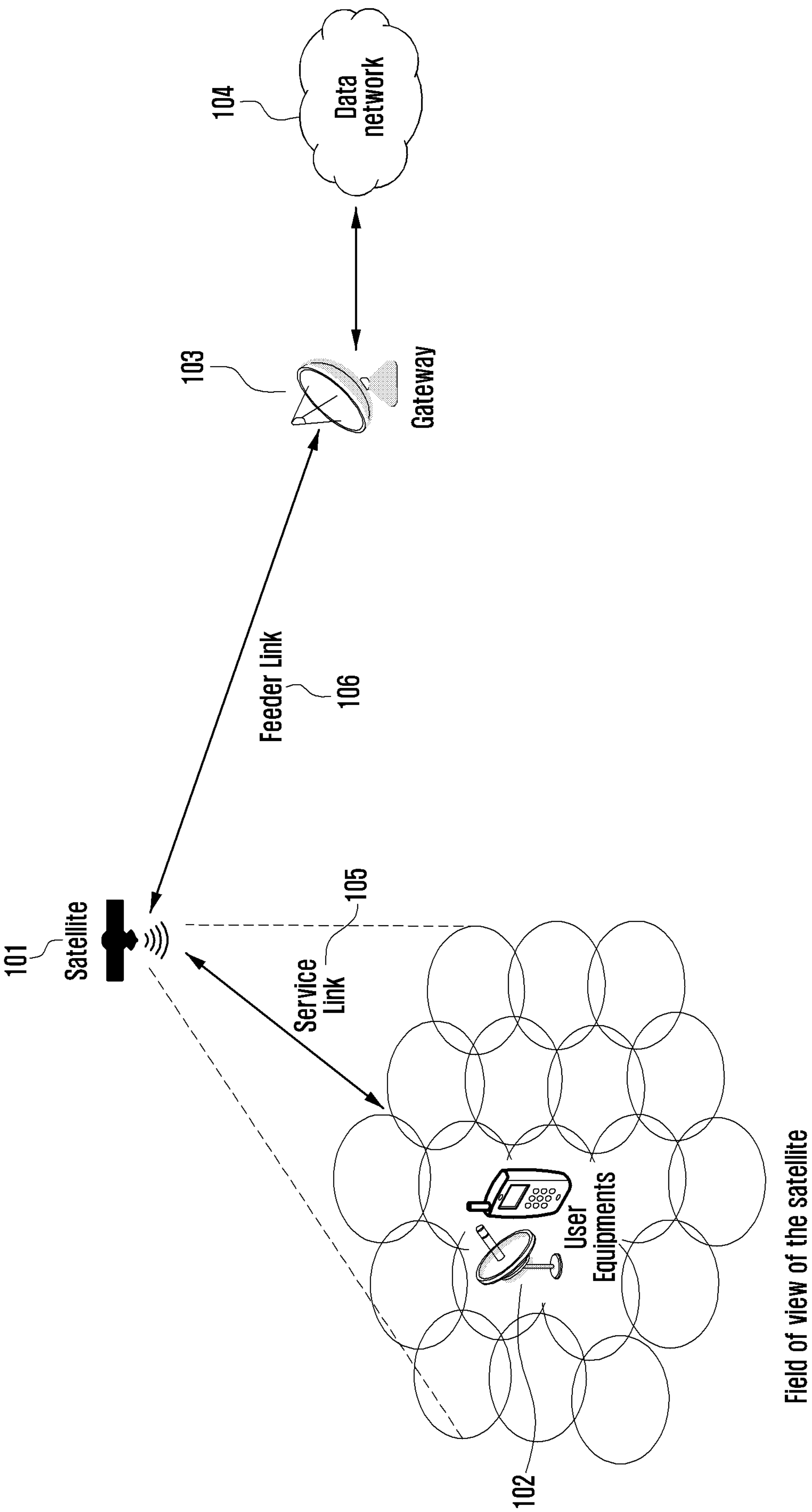

104
Data network
103
Gateway
Feeder Link
106
101
Satellite
105
Service Link
User Equipments
102
Field of view of the satellite

FIG. 2

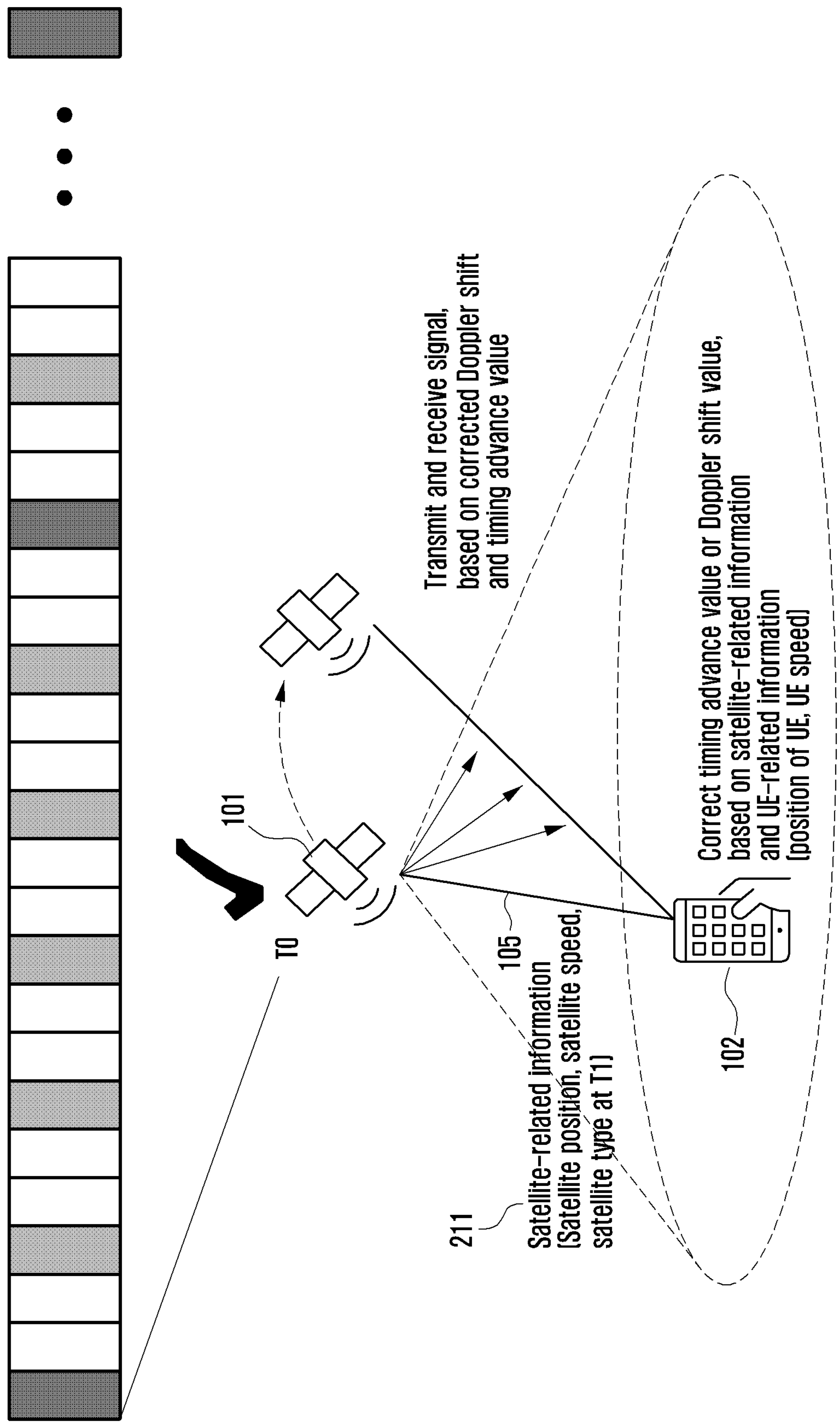
T0
101
Transmit and receive signal,
based on corrected Doppler shift
and timing advance value
Correct timing advance value or Doppler shift value,
based on satellite-related information
and UE-related information
[position of UE, UE speed]
105
102
211
Satellite-related information
[Satellite position, satellite speed,
satellite type at T1]

FIG. 3A

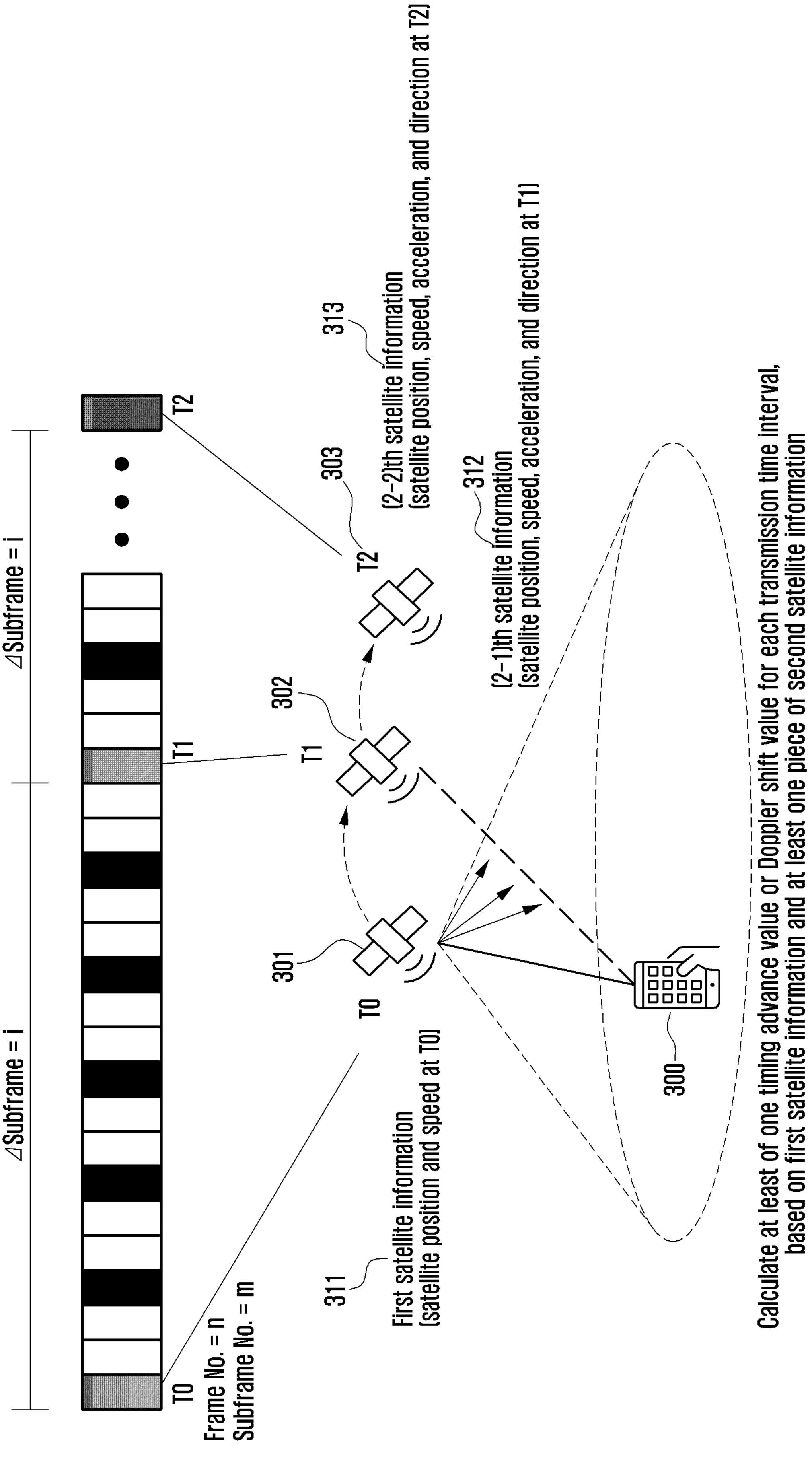
⊿Subframe = i
⊿Subframe = i
T0
Frame No. = n
Subframe No. = m
T1
T2
T0
T1
T2
301
302
303
311
First satellite information
(satellite position and speed at T0)
312
(2-1)th satellite information
(satellite position, speed, acceleration, and direction at T1)
313
(2-2)th satellite information
(satellite position, speed, acceleration, and direction at T2)
300
Calculate at least of one timing advance value or Doppler shift value for each transmission time interval,
based on first satellite information and at least one piece of second satellite information

FIG. 3B

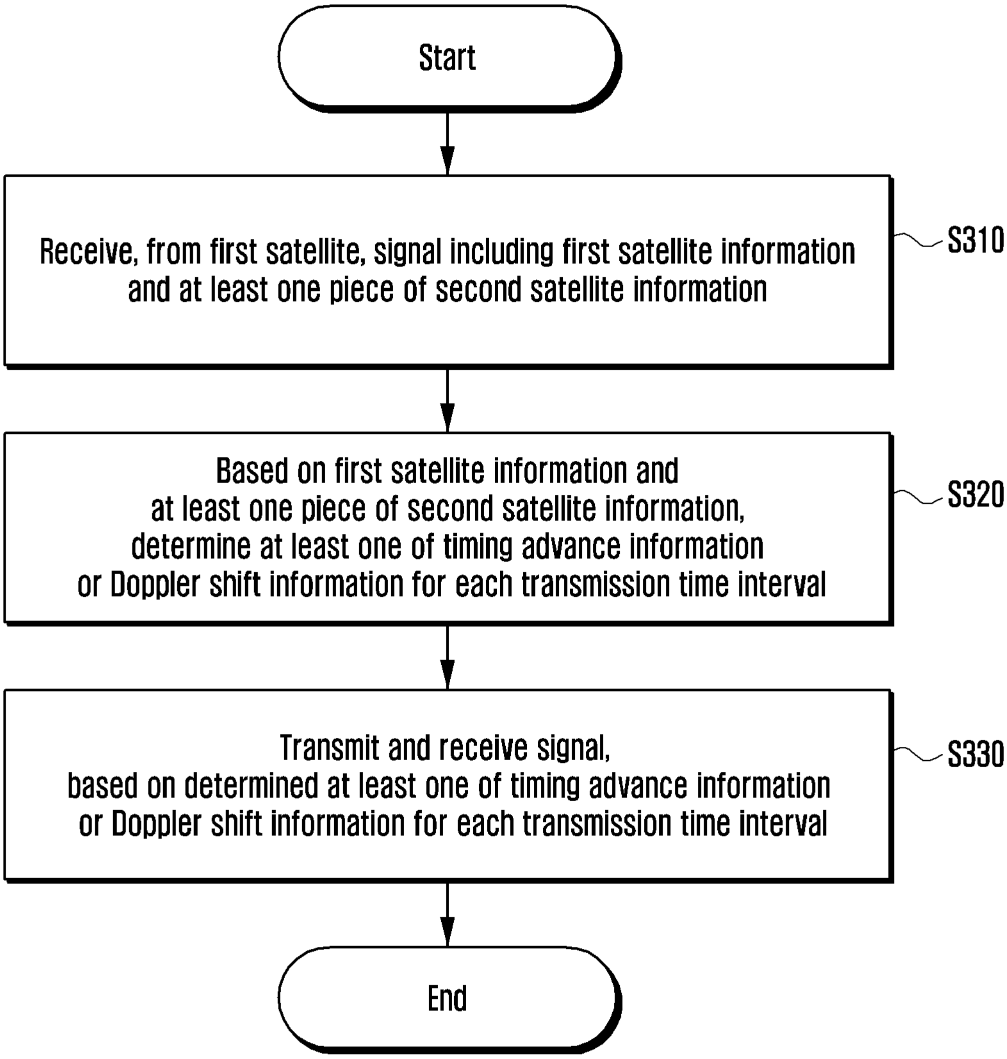
Start
Receive, from first satellite, signal including first satellite information and at least one piece of second satellite information
S310
Based on first satellite information and at least one piece of second satellite information, determine at least one of timing advance information or Doppler shift information for each transmission time interval
S320
Transmit and receive signal, based on determined at least one of timing advance information or Doppler shift information for each transmission time interval
S330
End

FIG. 4A

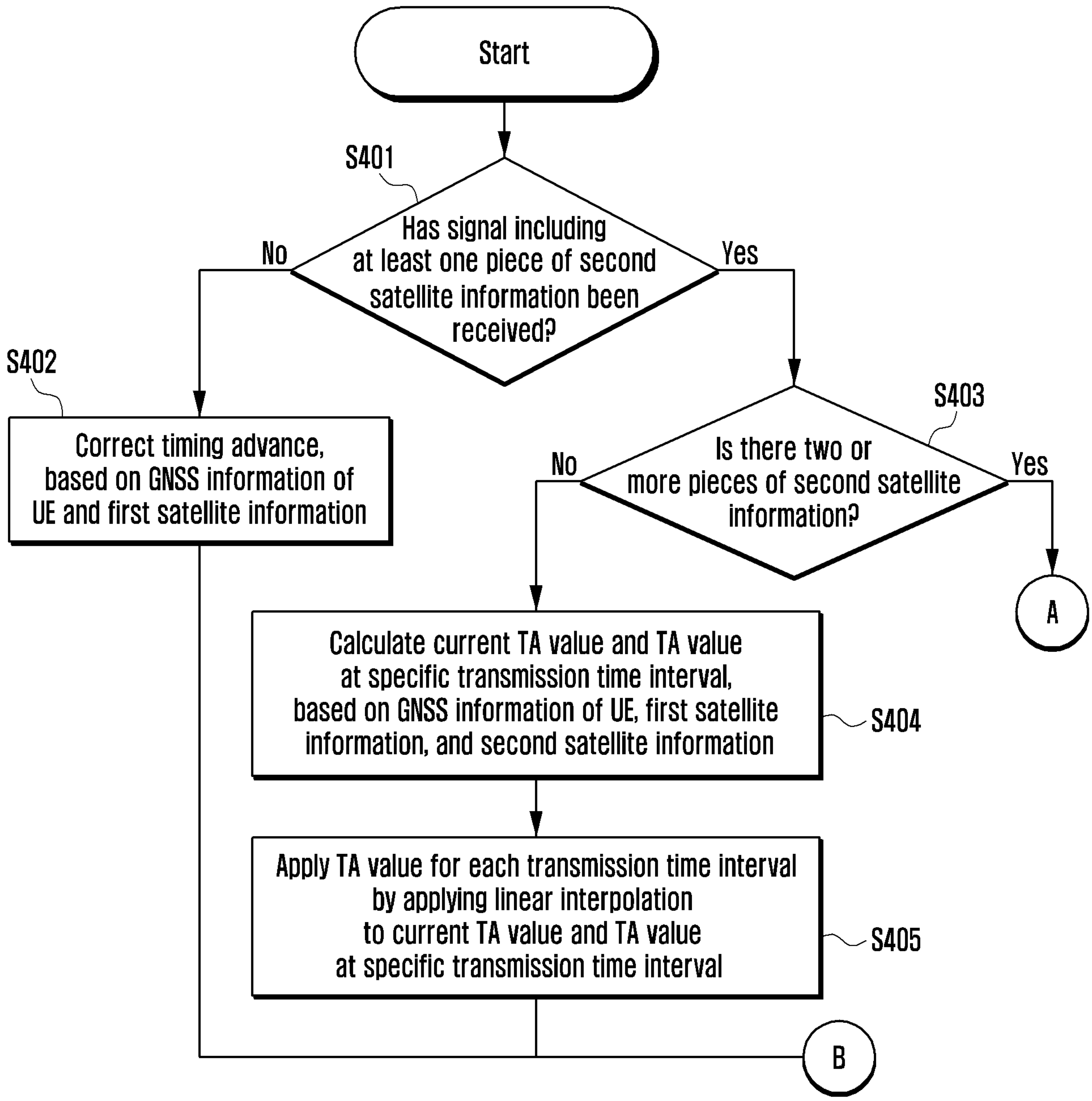
Start
S401
Has signal including at least one piece of second satellite information been received?
No
Yes
S402
Correct timing advance, based on GNSS information of UE and first satellite information
S403
Is there two or more pieces of second satellite information?
No
Yes
A
Calculate current TA value and TA value at specific transmission time interval, based on GNSS information of UE, first satellite information, and second satellite information
S404
Apply TA value for each transmission time interval by applying linear interpolation to current TA value and TA value at specific transmission time interval
S405
B

FIG. 4B

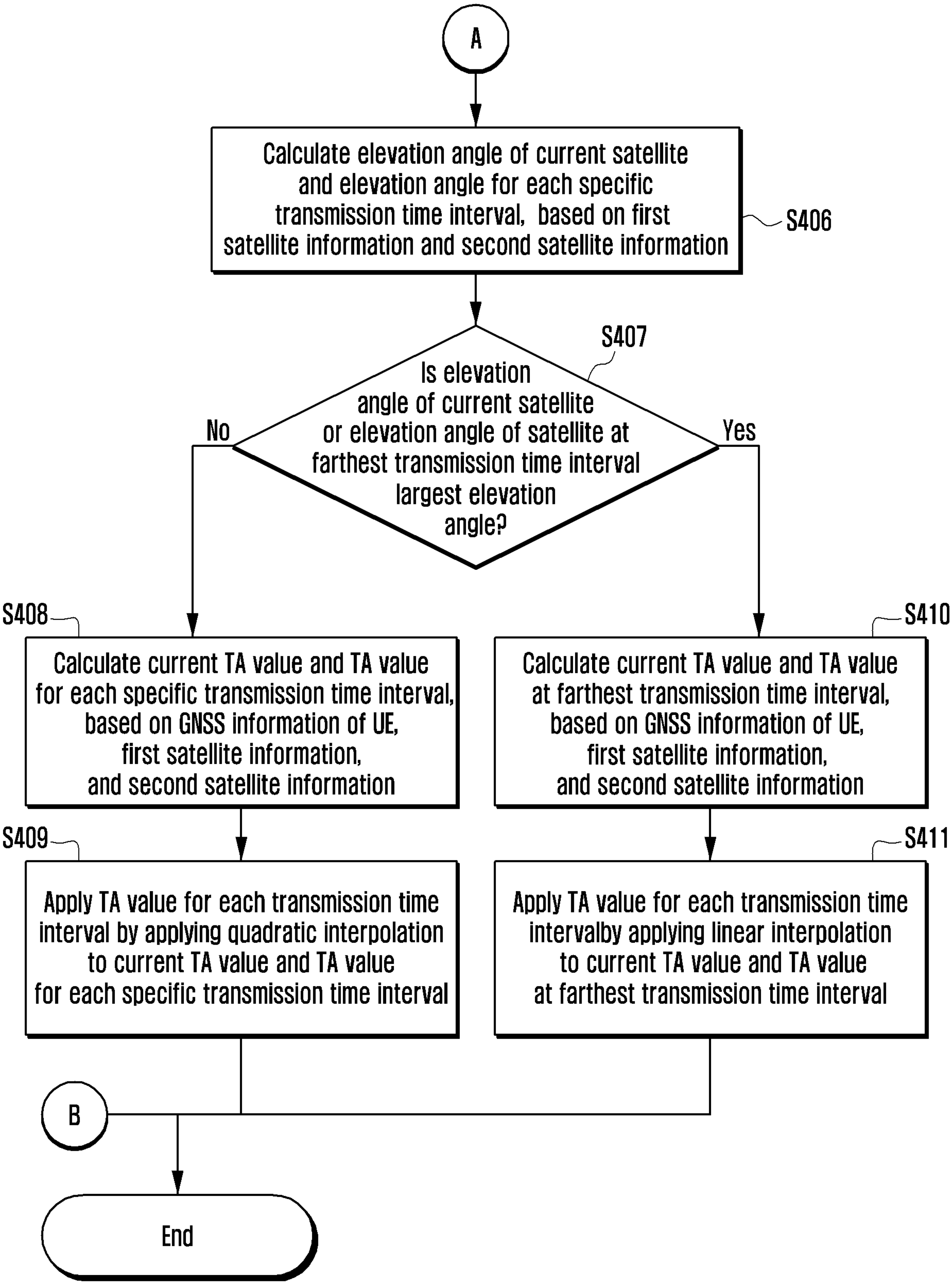
A
Calculate elevation angle of current satellite and elevation angle for each specific transmission time interval, based on first satellite information and second satellite information
S406
Is elevation angle of current satellite or elevation angle of satellite at farthest transmission time interval largest elevation angle?
S407
No
Yes
S408
Calculate current TA value and TA value for each specific transmission time interval, based on GNSS information of UE, first satellite information, and second satellite information
S410
Calculate current TA value and TA value at farthest transmission time interval, based on GNSS information of UE, first satellite information, and second satellite information
S409
Apply TA value for each transmission time interval by applying quadratic interpolation to current TA value and TA value for each specific transmission time interval
S411
Apply TA value for each transmission time intervalby applying linear interpolation to current TA value and TA value at farthest transmission time interval
B
End

FIG. 5A

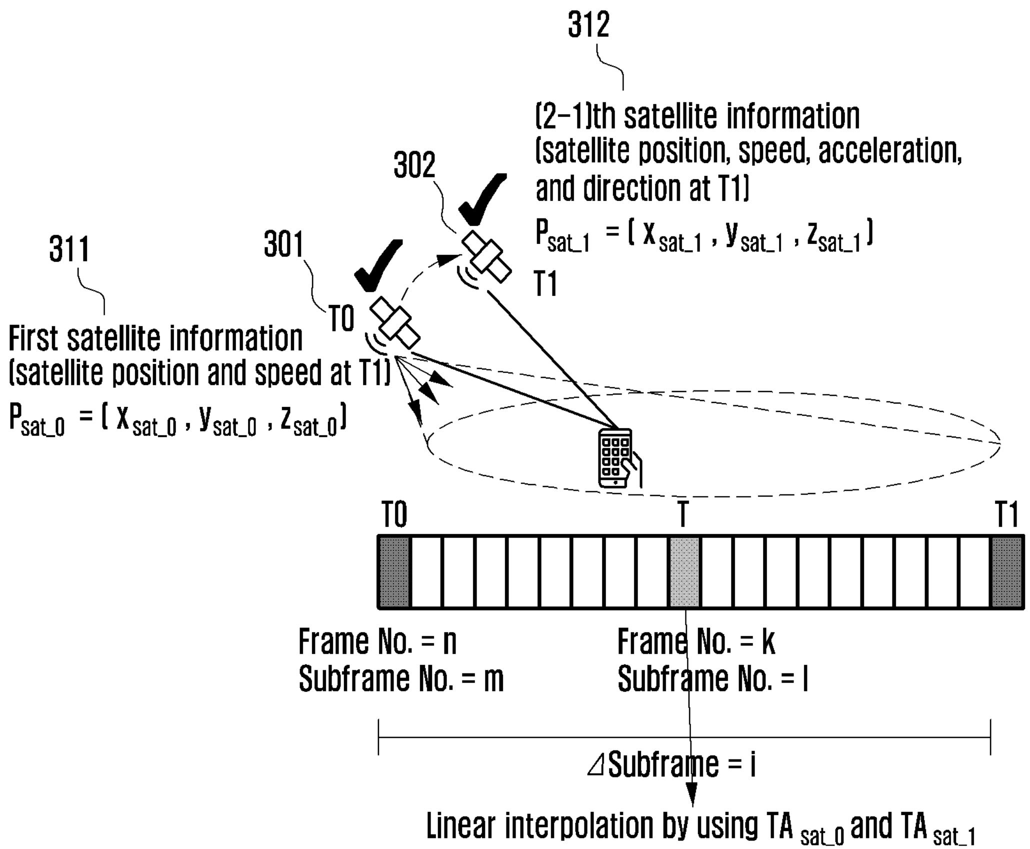


$P_{sat_0}$ : Satellite position at current transmission interval (T0)

$P_{sat_1}$ : Satellite position at future specific transmission interval (T1)

$TA_{sat_0}$ : $| P_{us} - P_{sat_0} |$

$TA_{sat_1}$ : $| P_{us} - P_{sat_1} |$

$TA_{sat_0}$ : TA between UE and current satellite

$TA_{sat_1}$ : TA between UE and satellite at future specific transmission interval (T1)

i : Interval between specific transmission time intervals

Equation of linear interpolated TA

$$TA(k, l) = TA_{sat_0} \frac{(10n + m + i) - (10k + l)}{(10n + m + i) - (10n + m)} + TA_{sat_1} \frac{(10k + l) - (10n + m)}{(10n + m + i) - (10n + m)}$$

FIG. 5B

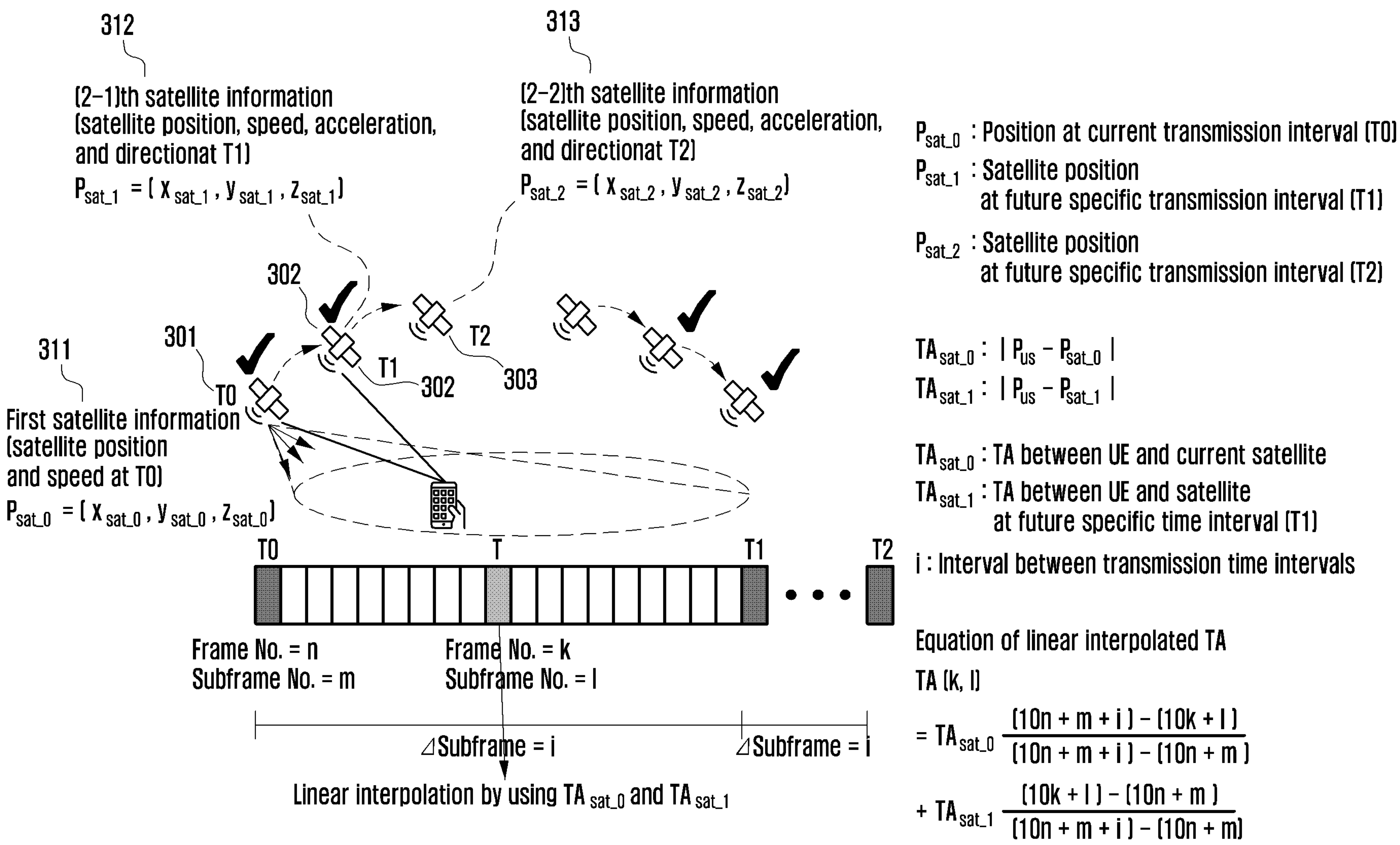
312
(2-1)th satellite information
(satellite position, speed, acceleration,
and directionat T1)
$P_{sat_1} = ( x_{sat_1}, y_{sat_1}, z_{sat_1})$
313
(2-2)th satellite information
(satellite position, speed, acceleration,
and directionat T2)
$P_{sat_2} = ( x_{sat_2}, y_{sat_2}, z_{sat_2})$
311
First satellite information
(satellite position
and speed at T0)
$P_{sat_0} = ( x_{sat_0}, y_{sat_0}, z_{sat_0})$
301
302
302
303
T0
T1
T2
T0
T
T1
T2
Frame No. = n
Subframe No. = m
Frame No. = k
Subframe No. = l
⊿Subframe = i
⊿Subframe = i
Linear interpolation by using $TA_{sat_0}$ and $TA_{sat_1}$
$P_{sat_0}$ : Position at current transmission interval (T0)
$P_{sat_1}$ : Satellite position
at future specific transmission interval (T1)
$P_{sat_2}$ : Satellite position
at future specific transmission interval (T2)
$TA_{sat_0}$ : $| P_{us} - P_{sat_0} |$
$TA_{sat_1}$ : $| P_{us} - P_{sat_1} |$
$TA_{sat_0}$ : TA between UE and current satellite
$TA_{sat_1}$ : TA between UE and satellite
at future specific time interval (T1)
i : Interval between transmission time intervals
Equation of linear interpolated TA
TA (k, l)
$= TA_{sat_0} \frac{(10n + m + i) - (10k + l)}{(10n + m + i) - (10n + m)}$
$+ TA_{sat_1} \frac{(10k + l) - (10n + m)}{(10n + m + i) - (10n + m)}$

FIG. 5C

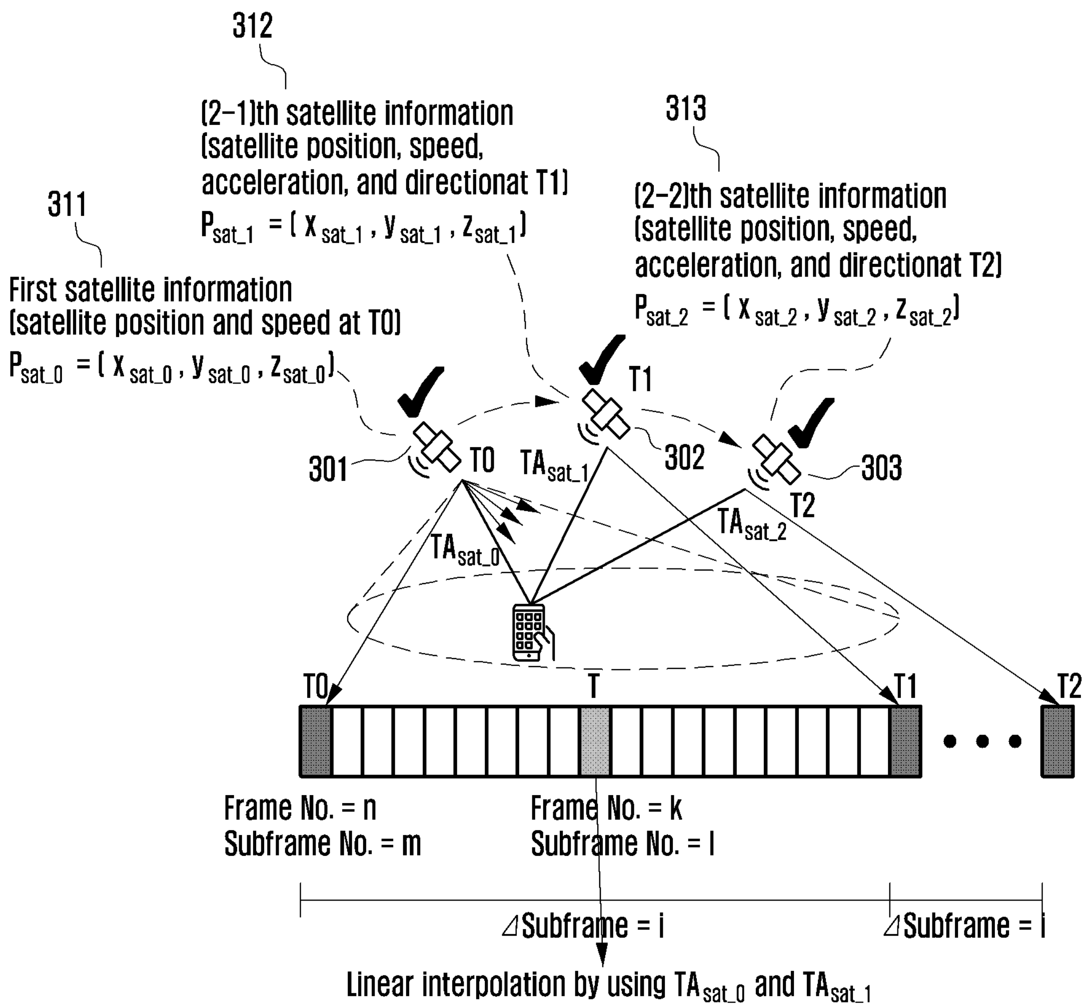


$P_{sat_0}$ : Current satellite position

$P_{sat_1}$ : Satellite position at future specific transmission interval (T1)

$P_{sat_2}$ : Satellite position at future specific transmission interval (T2)

$TA_{sat_0}$ : $| P_{us} - P_{sat_0} |$

$TA_{sat_1}$ : $| P_{us} - P_{sat_1} |$

$TA_{sat_2}$ : $| P_{us} - P_{sat_2} |$

$TA_{sat_0}$ : TA between UE and current satellite

$TA_{sat_1}$ : TA between UE and satellite at future specific transmission interval (T1)

$TA_{sat_2}$ : TA between UE and satellite at future specific transmission interval (T2)

i : Interval between specific time intervals

Equation of quadratic interpolated TA

$$TA(k, l) = TA_{sat_0} L_0(k, l) + TA_{sat_1} L_1(k, l) + TA_{sat_2} L_2(k, l)$$

$L_0(k, l)$

$$= \frac{((10k + l) - (10n + m + i))((10k + l) - (10n + m + 2i))}{((10n + m) - (10n + m + i))((10n + m) - (10n + m + 2i))}$$

$L_1(k, l)$

$$= \frac{((10k + l) - (10n + m))((10k + l) - (10n + m + 2i))}{((10n + m + i) - (10n + m))((10n + m + i) - (10n + m + 2i))}$$

$L_2(k, l)$

$$= \frac{((10k + l) - (10n + m))((10k + l) - (10n + m + i))}{((10n + m + 2i) - (10n + m))((10n + m + i) - (10n + m - i))}$$

FIG. 6

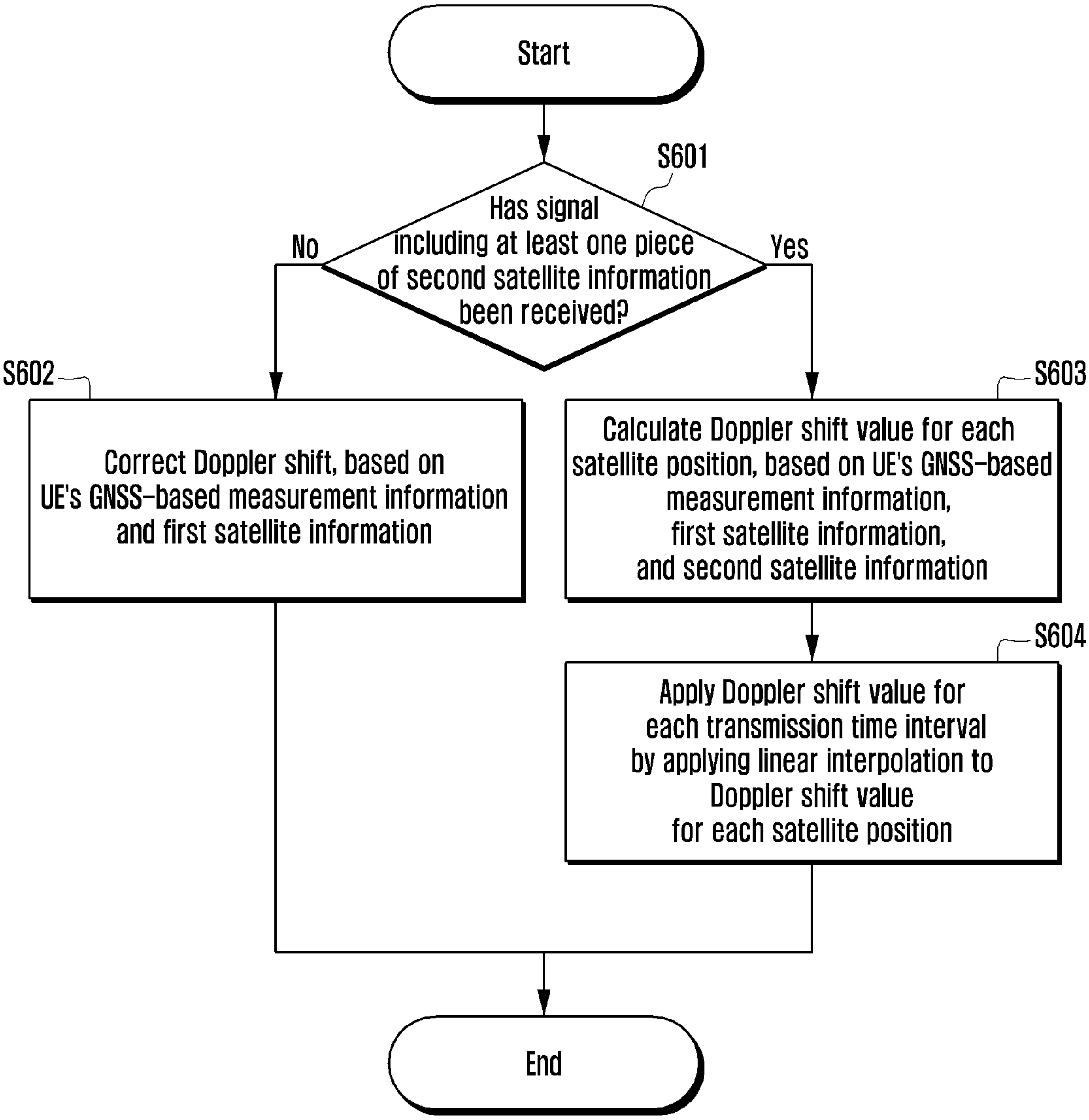
Start
S601
Has signal including at least one piece of second satellite information been received?
No
Yes
S602
Correct Doppler shift, based on UE's GNSS-based measurement information and first satellite information
S603
Calculate Doppler shift value for each satellite position, based on UE's GNSS-based measurement information, first satellite information, and second satellite information
S604
Apply Doppler shift value for each transmission time interval by applying linear interpolation to Doppler shift value for each satellite position
End

FIG. 7

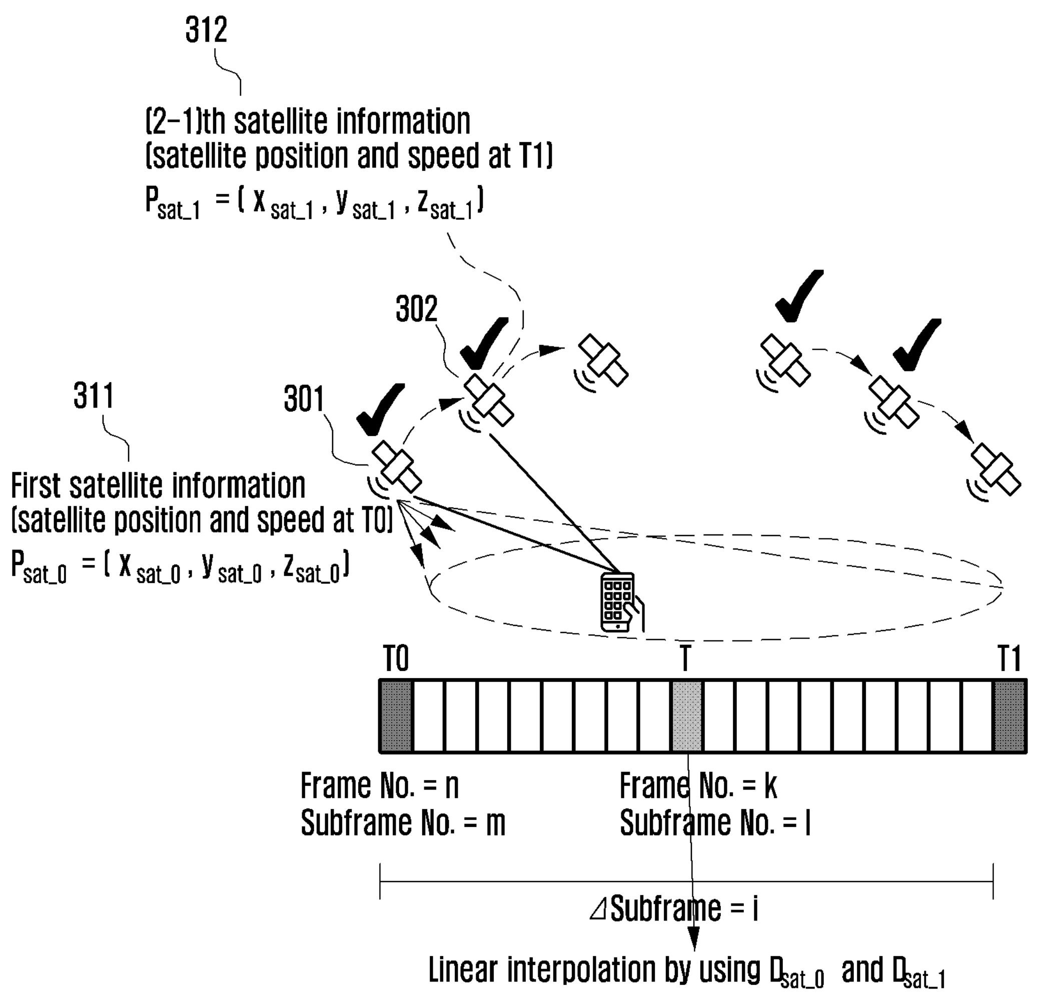


d1 : Distance between UE and satellite at current transmission time (T0)

d2 : Distance between UE and satellite at future specific transmission interval (T1)

$D_{sat_0}$ : Doppler shift value between UE and satellite at current transmission time (T0)

$D_{sat_1}$ : Doppler shift value between UE and satellite at future specific transmission interval (T1)

$e_{sat_0}$ : angle between UE and satellite at current transmission time (T0)

$e_{sat_1}$ : Elevation angle between UE and satellite at future specific transmission interval (T1)

$v_{sat}$ : Velocity of satellite    C : Speed of light

$R_E$ : Radius of Earth    h : Altitude of satellite

$f_c$ : center frequency

$$d1 = \sqrt{R_E^2 \sin e_{sat_0}{}^2 + h^2 + 2hR_E - R_E \sin e_{sat_0}}$$

$$d2 = \sqrt{R_E^2 \sin e_{sat_1}{}^2 + h^2 + 2hR_E - R_E \sin e_{sat_1}}$$

Calculation of Doppler shift value

$$D_{sat_0} = \left(\frac{V_{sat_0}}{C}\right)\left(\frac{R}{R+h} \cos e_{sat_0}\right) f_c$$

$$D_{sat_1} = \left(\frac{V_{sat_1}}{C}\right)\left(\frac{R}{R+h} \cos e_{sat_1}\right) f_c$$

Linear interpolation of Doppler shift

$$D(k,l) = D_{sat_0} \frac{(10n + m + i) - (10k + l)}{(10n + m + i) - (10n + m)} + D_{sat_1} \frac{(10k + l) - (10n + m)}{(10n + m + i) - (10n + m)}$$

FIG. 8

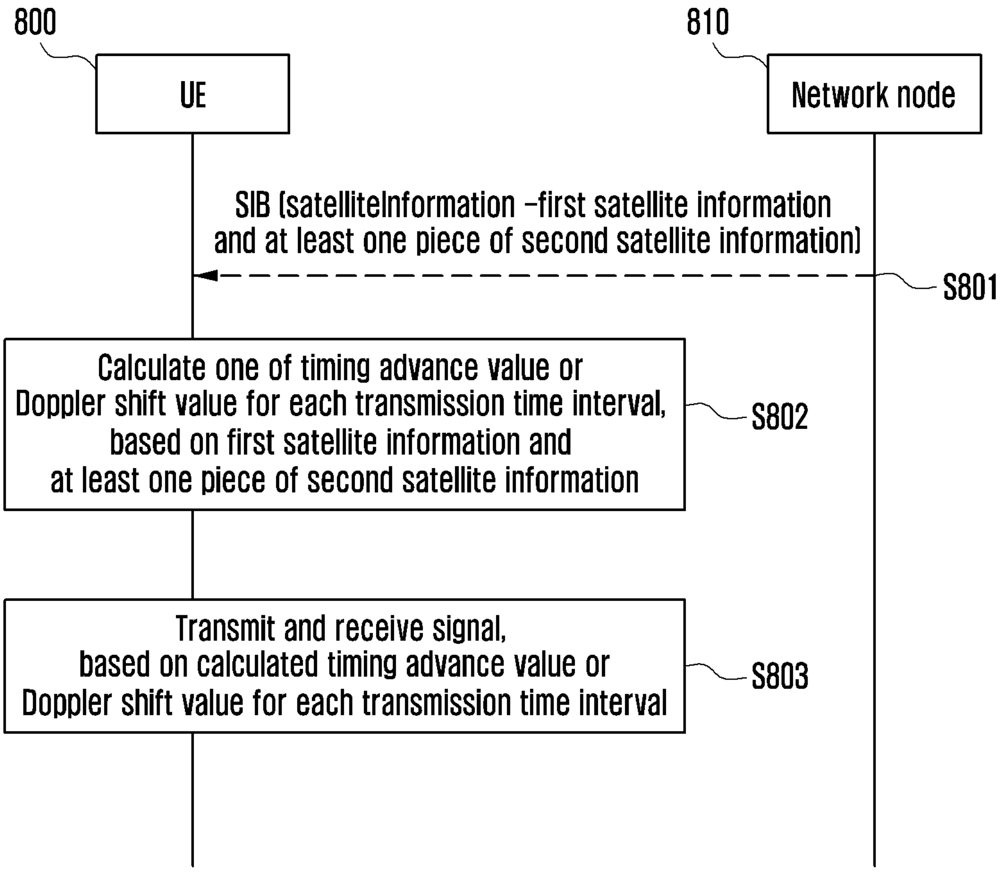
800
810
UE
Network node
SIB (satelliteInformation -first satellite information
and at least one piece of second satellite information)
S801
Calculate one of timing advance value or
Doppler shift value for each transmission time interval,
based on first satellite information and
at least one piece of second satellite information
S802
Transmit and receive signal,
based on calculated timing advance value or
Doppler shift value for each transmission time interval
S803

FIG. 9

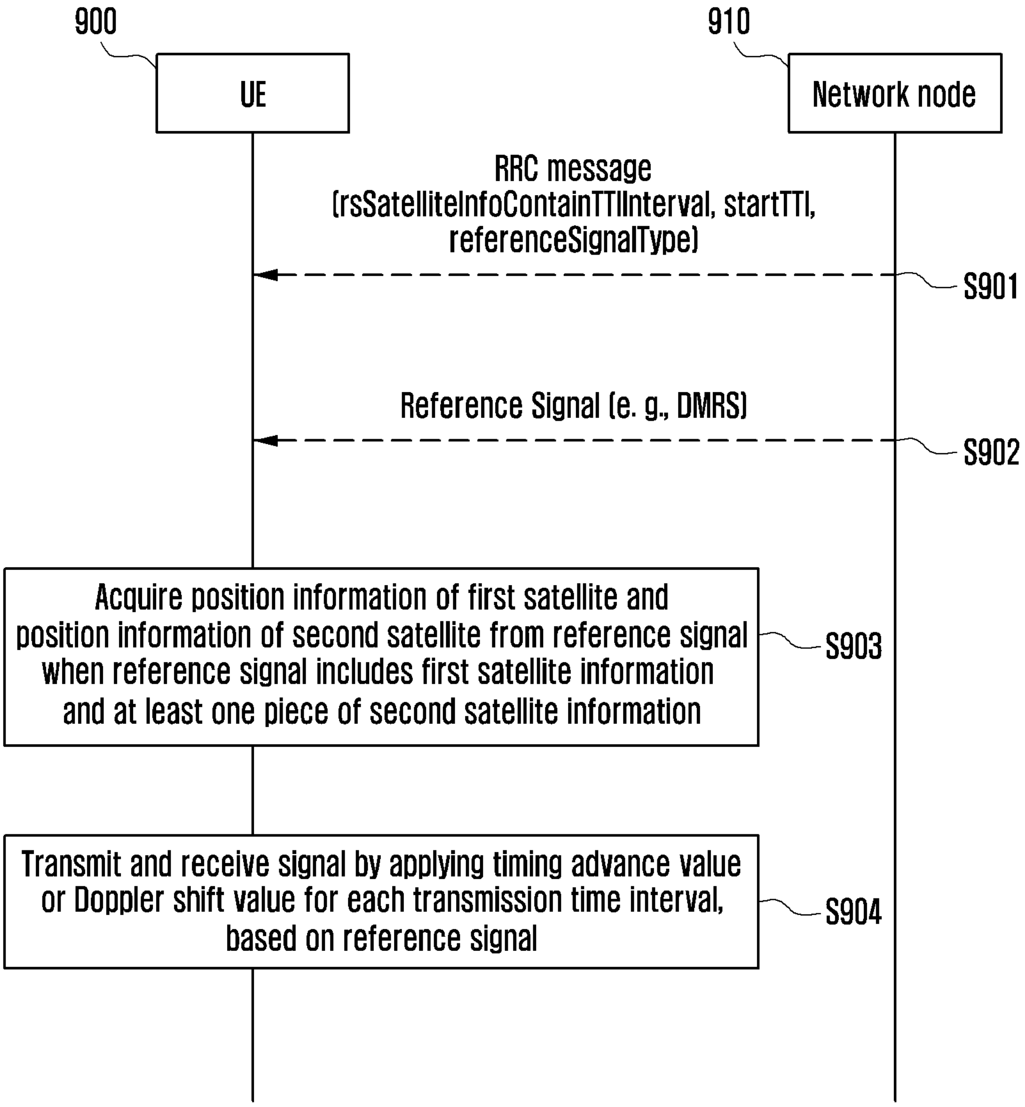
900
910
UE
Network node
RRC message
(rsSatelliteInfoContainTTIInterval, startTTI,
referenceSignalType)
S901
Reference Signal (e. g., DMRS)
S902
Acquire position information of first satellite and
position information of second satellite from reference signal
when reference signal includes first satellite information
and at least one piece of second satellite information
S903
Transmit and receive signal by applying timing advance value
or Doppler shift value for each transmission time interval,
based on reference signal
S904

FIG. 10

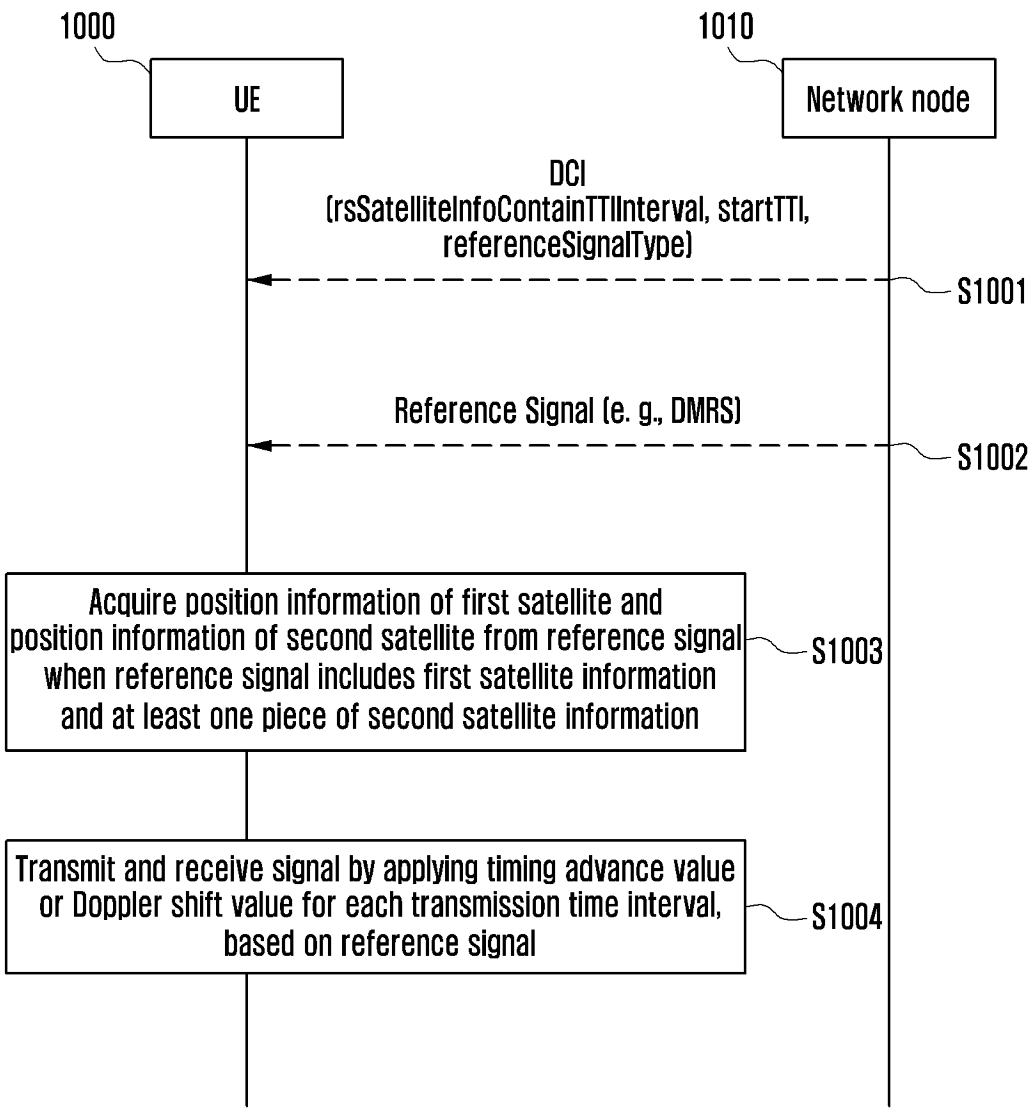
1000
1010
UE
Network node
DCI
(rsSatelliteInfoContainTTIInterval, startTTI,
referenceSignalType)
S1001
Reference Signal (e. g., DMRS)
S1002
Acquire position information of first satellite and
position information of second satellite from reference signal
when reference signal includes first satellite information
and at least one piece of second satellite information
S1003
Transmit and receive signal by applying timing advance value
or Doppler shift value for each transmission time interval,
based on reference signal
S1004

FIG. 11

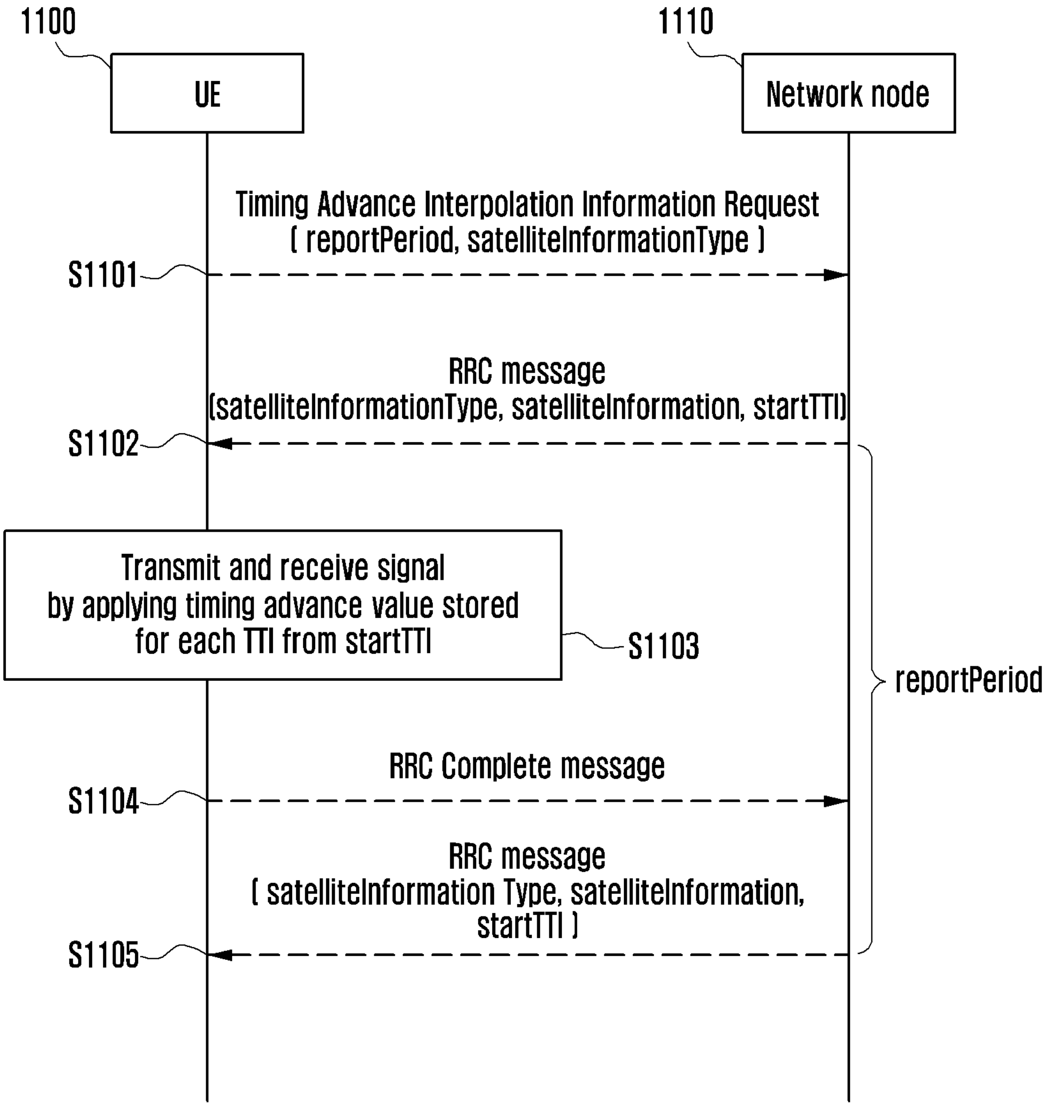
1100
1110
UE
Network node
Timing Advance Interpolation Information Request
[ reportPeriod, satelliteInformationType ]
S1101
RRC message
(satelliteInformationType, satelliteInformation, startTTI)
S1102
Transmit and receive signal
by applying timing advance value stored
for each TTI from startTTI
S1103
reportPeriod
RRC Complete message
S1104
RRC message
[ satelliteInformation Type, satelliteInformation,
startTTI ]
S1105

FIG. 12

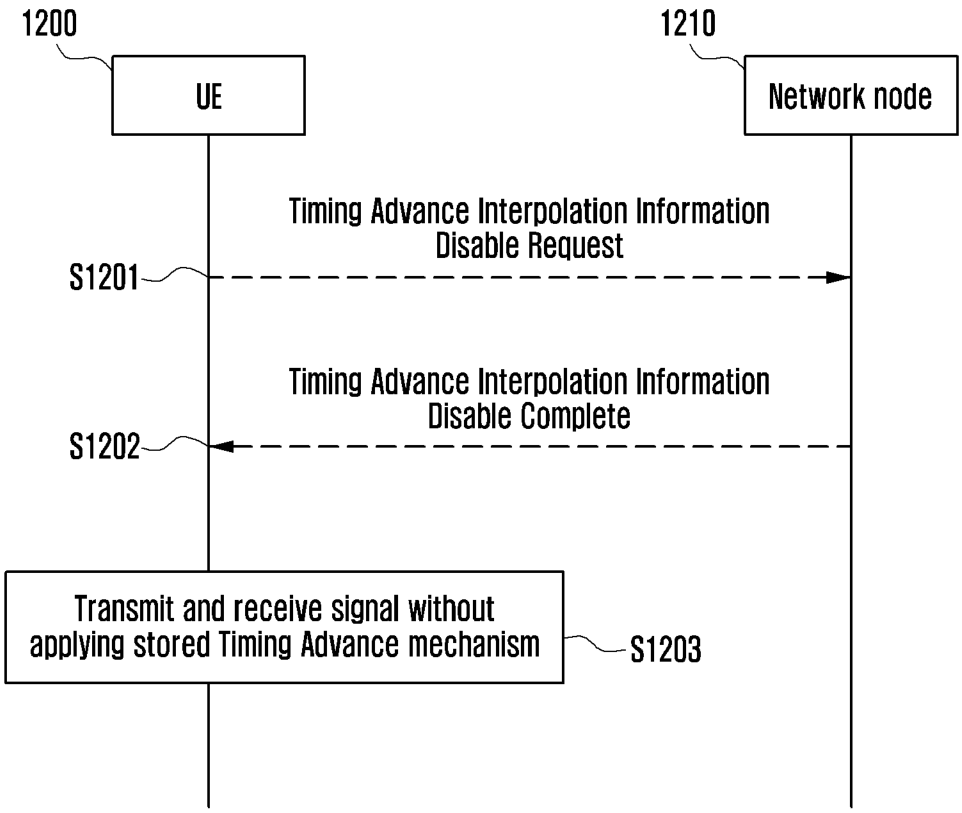
1200
UE
1210
Network node
Timing Advance Interpolation Information
Disable Request
S1201
Timing Advance Interpolation Information
Disable Complete
S1202
Transmit and receive signal without
applying stored Timing Advance mechanism
S1203

FIG. 13

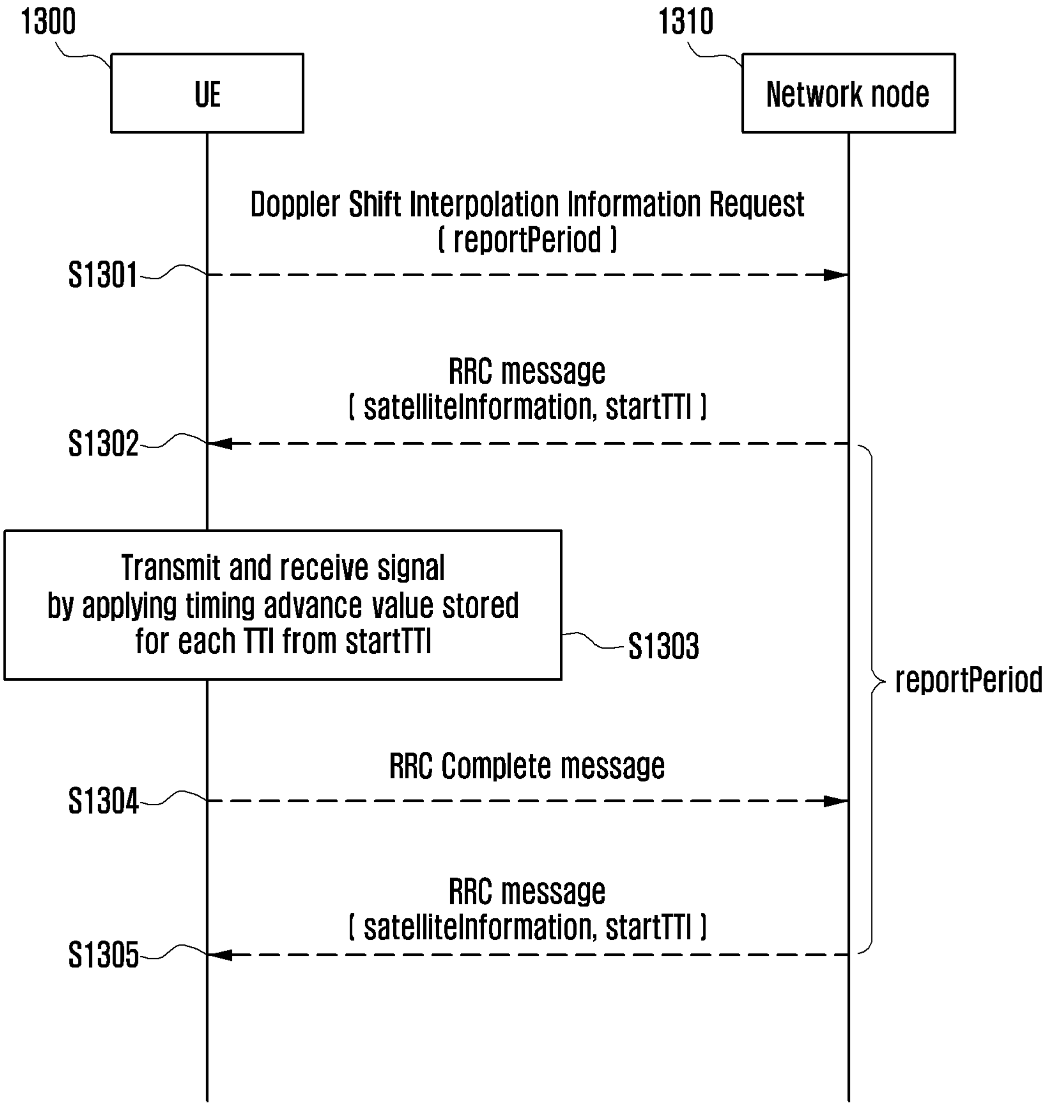
1300
1310
UE
Network node
Doppler Shift Interpolation Information Request
[ reportPeriod ]
S1301
RRC message
[ satelliteInformation, startTTI ]
S1302
Transmit and receive signal
by applying timing advance value stored
for each TTI from startTTI
S1303
reportPeriod
RRC Complete message
S1304
RRC message
[ satelliteInformation, startTTI ]
S1305

FIG. 14

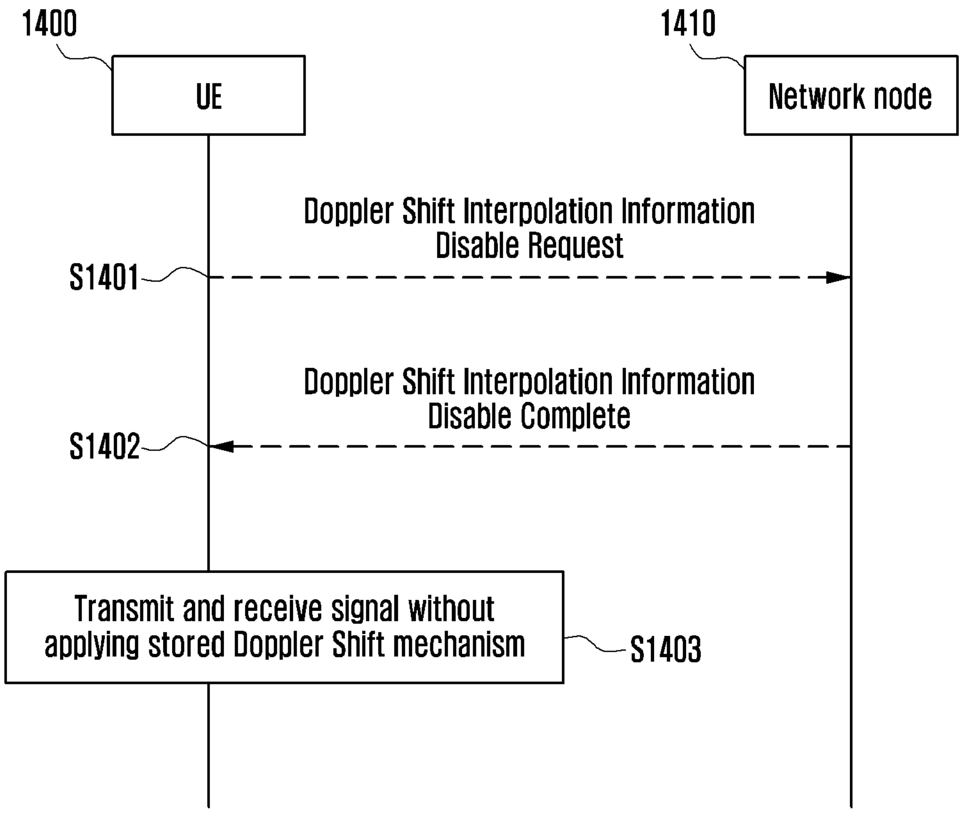
1400
1410
UE
Network node
Doppler Shift Interpolation Information
Disable Request
S1401
Doppler Shift Interpolation Information
Disable Complete
S1402
Transmit and receive signal without
applying stored Doppler Shift mechanism
S1403

FIG. 15

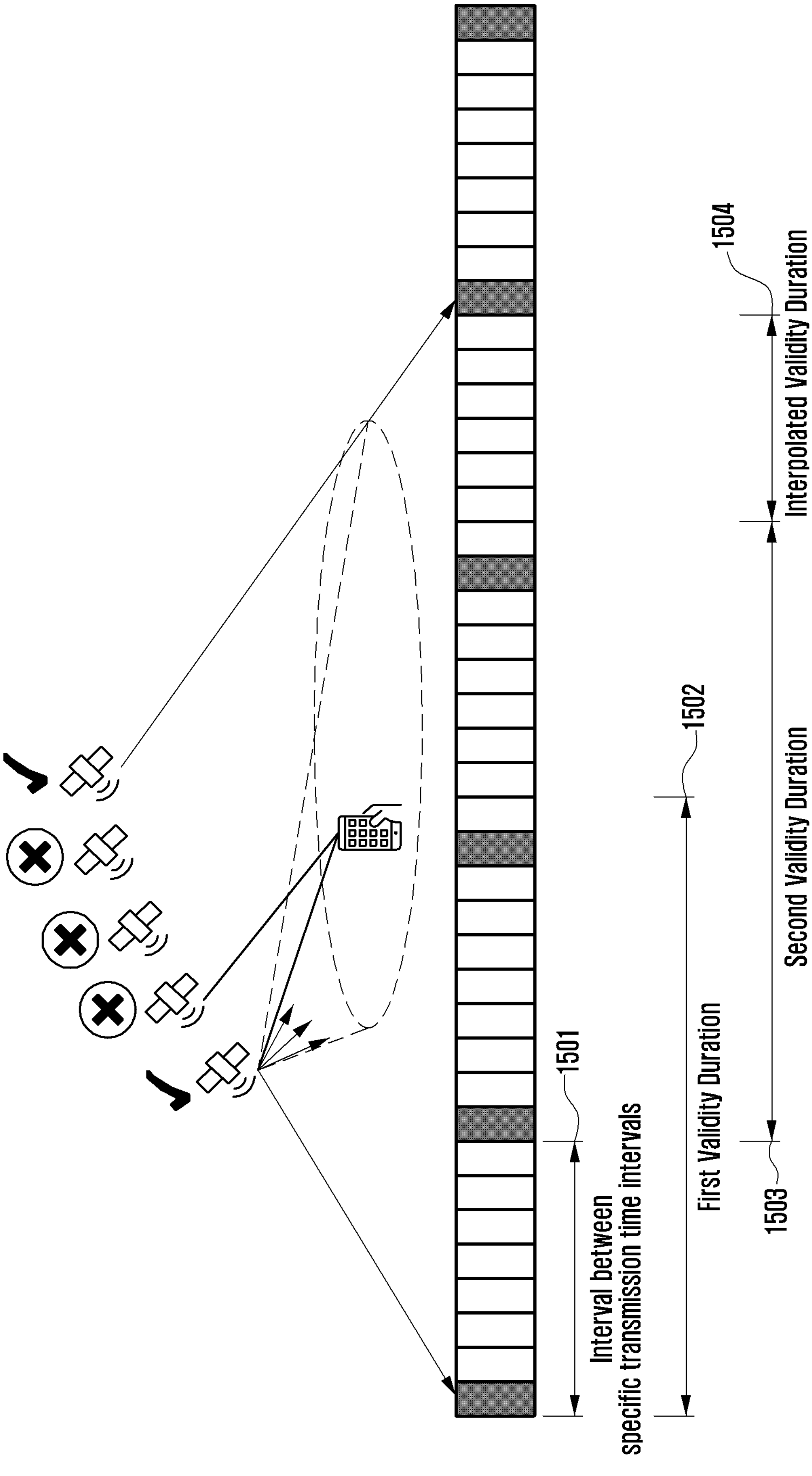
1501
Interval between
specific transmission time intervals
1502
First Validity Duration
1503
1504
Second Validity Duration
Interpolated Validity Duration

FIG. 16

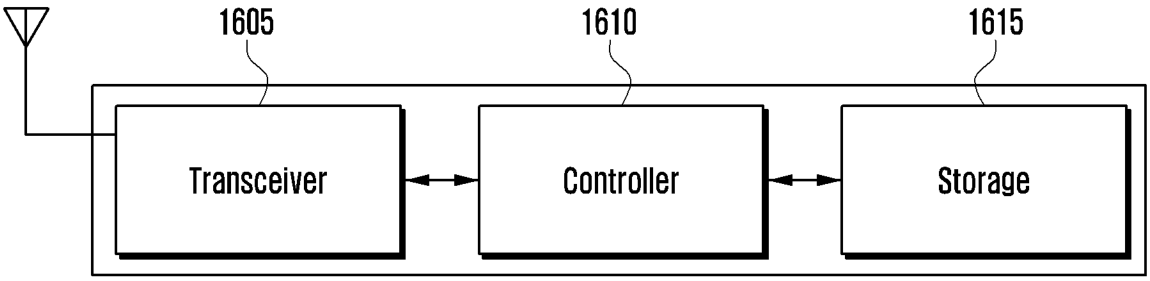

FIG. 17

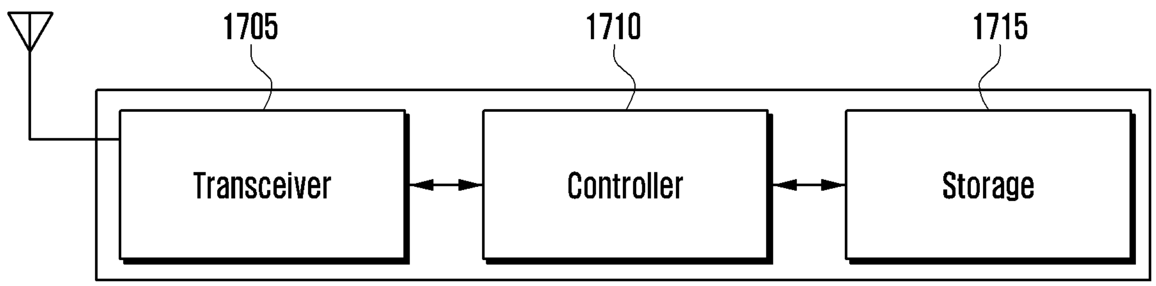

**INTERNATIONAL SEARCH REPORT**

International application No. **PCT/KR2023/013245**

**A. CLASSIFICATION OF SUBJECT MATTER**

**H04W 56/00**(2009.01)i; **H04B 7/185**(2006.01)i; **H04W 84/06**(2009.01)i

According to International Patent Classification (IPC) or to both national classification and IPC

**B. FIELDS SEARCHED**

Minimum documentation searched (classification system followed by classification symbols)

H04W 56/00(2009.01); G01S 19/39(2010.01); H04W 74/08(2009.01); H04W 8/08(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성(satellite), 위성 정보(satellite information), 타이밍 어드밴스(timing advance, TA), 도플러 효과(doppler effect)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2022-0135947 A (SAMSUNG ELECTRONICS CO., LTD.) 07 October 2022 (2022-10-07)<br>See paragraphs [0435]-[0445]; claims 1 and 5; and figure 38. | 1-2,7-10,14-15<br>3-6,11-13 |
| Y | KR 10-2008-0045700 A (GPS SOURCE, INC.) 23 May 2008 (2008-05-23)<br>See claim 8. | 1-2,7-10,14-15 |
| A | KR 10-2022-0030944 A (SONY GROUP CORPORATION) 11 March 2022 (2022-03-11)<br>See paragraphs [0035]-[0044]; and figure 6. | 1-15 |
| A | KR 10-2022-0056732 A (DAEGU GYEONGBUK INSTITUTE OF SCIENCE AND TECHNOLOGY) 06 May 2022 (2022-05-06)<br>See paragraphs [0109]-[0117]; and figure 3. | 1-15 |
| A | KR 10-0922937 B1 (SAMSUNG ELECTRONICS CO., LTD.) 22 October 2009 (2009-10-22)<br>See paragraphs [0126]-[0133]; and figure 9. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 November 2023** | **01 December 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/013245**

| Patent document cited in search report | Publication date (day/month/year) | Patent family member(s) | Publication date (day/month/year) |
|---|---|---|---|
| KR 10-2022-0135947 A | 07 October 2022 | WO 2022-211525 A1 | 06 October 2022 |
| KR 10-2008-0045700 A | 23 May 2008 | CN 101313228 A | 26 November 2008 |
| | | EP 1922558 A2 | 21 May 2008 |
| | | JP 2009-508111 A | 26 February 2009 |
| | | US 2007-0063893 A1 | 22 March 2007 |
| | | WO 2007-030384 A2 | 15 March 2007 |
| | | WO 2007-030384 A3 | 17 July 2008 |
| KR 10-2022-0030944 A | 11 March 2022 | CN 112203295 A | 08 January 2021 |
| | | CN 114073116 A | 18 February 2022 |
| | | EP 3998795 A1 | 18 May 2022 |
| | | JP 2022-540826 A | 20 September 2022 |
| | | US 2022-0329314 A1 | 13 October 2022 |
| | | WO 2021-004357 A1 | 14 January 2021 |
| KR 10-2022-0056732 A | 06 May 2022 | None | |
| KR 10-0922937 B1 | 22 October 2009 | US 2004-0160360 A1 | 19 August 2004 |
| | | US 7239273 B2 | 03 July 2007 |

Form PCT/ISA/210 (patent family annex) (July 2022)